# EUROPÄISCHE PATENTSCHRIFT

(11) **EP 2 686 372 B1**
(45) Veröffentlichungstag und Bekanntmachung des Hinweises auf die Patenterteilung: **09.06.2021**
(21) Anmeldenummer: 12707611.5
(22) Anmeldetag: 08.03.2012
(51) Int. Cl.: C08J 9/00, C08J 9/28, C08K 5/00, C08G 18/32

(54) **VERFAHREN ZUR HERSTELLUNG VON FLAMMGESCHÜTZTEN PORÖSEN MATERIALIEN AUF BASIS VON POLYHARNSTOFF**
METHOD FOR PRODUCING FLAME-PROOFED POROUS POLYUREA-BASED MATERIALS
PROCÉDÉ DE FABRICATION DE MATÉRIAUX POREUX IGNIFUGÉS À BASE DE POLYCARBAMIDE

(30) Priorität: 18.03.2011 EP 11158820
(43) Veröffentlichungstag der Anmeldung: 22.01.2014
(73) Patentinhaber: BASF SE, 67056 Ludwigshafen am Rhein (DE)
(72) Erfinder: FRICKE, Marc, 49090 Osnabrück (DE); ELBING, Mark, 28215 Bremen (DE)
(74) Vertreter: BASF IP Association
(86) Internationale Anmeldenummer: PCT/EP2012/054049
(87) Internationale Veröffentlichungsnummer: WO 2012/126742

(56) Entgegenhaltungen:
- WO-A1-2008/138978
- WO-A1-2011/018371

## Beschreibung

Die vorliegende Erfindung betrifft ein Verfahren zur Herstellung von flammgeschützten porösen Materialien umfassend folgende Schritte:
(a) Umsetzung von mindestens einem mehrfunktionellen Isocyanat (a1) und mindestens einem mehrfunktionellen aromatischen Amin (a2) in einem organischen Lösungsmittel optional in Gegenwart von Wasser als Komponente (a3) und optional in Gegenwart mindestens eines Katalysators (a5); und anschließend
(b) Entfernung des organischen Lösungsmittels unter Erhalt des organischen porösen Materials,
wobei Schritt (a) in Gegenwart mindestens eines organischen Flammschutzmittels als Komponente (a4) durchgeführt wird, welches in dem Lösungsmittel löslich ist,
wobei mindestens eine mehrfunktionelle aromatische Amin (a2) ausgewählt ist aus der Gruppe bestehend aus Isomeren und Derivaten von Diaminodiphenylmethan.

Weiterhin betrifft die Erfindung die so erhältlichen porösen Materialien sowie die Verwendung der porösen Materialien zur Wärmedämmung.

Poröse Materialien, beispielsweise Polymerschäume, mit Poren im Größenbereich von wenigen Mikrometern oder deutlich darunter und einer hohen Porosität von mindestens 70 % sind aufgrund theoretischer Überlegungen besonders gute Wärmeisolatoren. Solche porösen Materialien mit kleinem mittlerem Porendurchmesser können beispielsweise als organische Xerogele vorliegen. In der Literatur wird der Begriff Xerogel nicht durchweg einheitlich verwendet. Im Allgemeinen wird unter einem Xerogel ein poröses Material verstanden, welches durch ein Sol-Gel-Verfahren hergestellt wurde, wobei die flüssige Phase durch Trocknung unterhalb der kritischen Temperatur und unterhalb des kritischen Drucks der flüssigen Phase ("subkritische Bedingungen") aus dem Gel entfernt wurde. Im Gegensatz hierzu spricht man im Allgemeinen von Aerogelen, wenn die Entfernung der flüssigen Phase aus dem Gel unter überkritischen Bedingungen durchgeführt wurde.

Beim Sol-Gel-Verfahren wird zunächst ein Sol auf Basis einer reaktiven organischen Gelvorstufe hergestellt und danach das Sol durch eine vernetzende Reaktion zu einem Gel geliert. Um aus dem Gel ein poröses Material, beispielsweise ein Xerogel, zu erhalten, muss die Flüssigkeit entfernt werden. Dieser Schritt wird nachfolgend vereinfachend als Trocknung bezeichnet.

Aus der WO-2008/138978 sind Xerogele enthaltend von 30 bis 90 Gew.-% mindestens eines mehrfunktionellen Isocyanats und von 10 bis 70 Gew.-% mindestens eines mehrfunktionellen aromatischen Amins bekannt, deren volumengewichteter mittlerer Porendurchmesser höchstens 5 Mikrometer beträgt.

Die aus dem Stand der Technik bekannten Verfahren zeigen jedoch bei der Trocknung, insbesondere bei Trocknung unter subkritischen Bedingungen, eine Schrumpfung unter Verringerung der Porosität und Erhöhung der Dichte.

Ein weiteres Problem bei den aus dem Stand der Technik bekannten Formulierungen auf Basis von Isocyanaten und Aminen sind die für viele Anwendungen unzureichenden Flammschutzeigenschaften.

Es bestand daher die Aufgabe, die vorgenannten Nachteile zu vermeiden. Insbesondere sollte ein poröses Material zur Verfügung gestellt werden, das die vorgenannten Nachteile nicht oder in geringerem Maße aufweist. Die porösen Materialien sollten eine günstige Wärmeleitfähigkeit im Vakuum aufweisen. Darüber hinaus sollten die porösen Materialien auch bei Drücken oberhalb des Vakuumbereiches, insbesondere in einem Druckbereich von ungefähr 1 mbar bis ungefähr 100 mbar eine geringe thermische Leitfähigkeit aufweisen. Dies ist wünschenswert, da in Vakuumpaneelen im Laufe der Zeit eine Druckzunahme erfolgt. Darüber hinaus sollten die porösen Materialien auch im belüfteten Zustand, d. h. bei Normaldruck, günstige thermische Leitfähigkeiten aufweisen. Weiterhin sollte das poröse Material gleichzeitig eine hohe Porosität, eine geringe Dichte und eine ausreichend hohe mechanische Stabilität bei gleichzeitig günstigen Flammschutzeigenschaften aufweisen.

Es sollte ein Verfahren aufgefunden werden, welches zu porösen organischen Materialien mit verbesserten Flammschutzeigenschaften führt. Gleichzeitig sollten die Materialien eine günstige Porenstruktur aufweisen, so dass oben genannte Vorteile erhalten werden. Bei der Entfernung des Lösungsmittels aus dem erhaltenen Gelkörper sollte die auftretende Schrumpfung minimiert werden, insbesondere dann, wenn das Lösungsmittel unter subkritischen Bedingungen entfernt wird.

Demgemäß wurde das erfindungsgemäße Verfahren und die so erhältlichen porösen Materialien gefunden.

Das erfindungsgemäße Verfahren zur Herstellung eines porösen Materials umfasst folgende Schritte:
(a) Umsetzung von mindestens einem mehrfunktionellen Isocyanat (a1) und mindestens einem mehrfunktionellen aromatischen Amin (a2) in einem organischen Lösungsmittel optional in Gegenwart von Wasser als Komponente (a3) und optional in Gegenwart mindestens eines Katalysators (a5); und anschließend
(b) Entfernung des organischen Lösungsmittels unter Erhalt des organischen porösen Materials,

wobei Schritt (a) in Gegenwart mindestens eines organischen Flammschutzmittels als Komponente (a4) durchgeführt wird, welches in dem Lösungsmittel löslich ist, wobei mindestens eine mehrfunktionelle aromatische Amin (a2) ausgewählt ist aus der Gruppe bestehend aus Isomeren und Derivaten von Diaminodiphenylmethan.

Ein organisches Flammschutzmittel ist eine organische Verbindung, die gleichzeitig ein Flammschutzmittel ist. Eine organische Verbindung ist eine Verbindung, die mindestens ein Kohlenstoffatom umfasst.

Ein Flammschutzmittel ist eine Verbindung oder eine Mischung mehrerer Verbindungen, welche die Flammschutzeigenschaften der resultierenden porösen Materialien verbessert. Die Flammschutzeigenschaften werden im Rahmen der vorliegenden Erfindung durch den BKZ-Test charakterisiert. Unter BKZ-Test wird die Bestimmung der Brandkennziffer (Brennbarkeitsgrad und Qualmgrad) gemäss "Wegleitung für Feuerpolizeivorschriften: Baustoffe und Bauteile", Teil B: Prüfbestimmungen, Ausgabe 1988 (mit Nachträgen 1990, 1994 und 1995) der Vereinigung Kantonaler Feuerversicherungen (VKF) verstanden. Vorzugsweise ist ein Flammschutzmittel dadurch charakterisiert, dass es zu einem Brennbarkeitsgrad der resultierenden porösen Materialien von 5 im BKZ-Test führt.

Bevorzugte Ausführungsformen sind den Ansprüchen und der Beschreibung zu entnehmen. Kombinationen bevorzugter Ausführungsformen verlassen den Rahmen dieser Erfindung nicht. Nachfolgend werden zunächst bevorzugte Ausführungsformen der eingesetzten Komponenten erläutert.

Die mehrfunktionellen Isocyanate (a1) werden im Folgenden gemeinsam als Komponente (a1) bezeichnet. Entsprechend werden die mehrfunktionellen aromatischen Amine (a2) im Folgenden gemeinsam als Komponente (a2) bezeichnet. Es ist für den Fachmann offensichtlich, dass die genannten Monomerkomponenten im porösen Material in umgesetzter Form vorliegen.

Unter Funktionalität einer Verbindung soll im Rahmen der vorliegenden Erfindung die Zahl der reaktiven Gruppen pro Molekül verstanden werden. Im Fall der Monomerkomponente (a1) ist die Funktionalität die Anzahl der Isocyanatgruppen pro Molekül. Im Falle der Aminogruppen der Monomerkomponente (a2) bezeichnet die Funktionalität die Zahl der reaktiven Aminogruppen pro Molekül. Eine mehrfunktionelle Verbindung weist dabei eine Funktionalität von mindestens 2 auf.

Falls als Komponente (a1) beziehungsweise (a2) Mischungen aus Verbindungen mit unterschiedlicher Funktionalität zum Einsatz kommen, ergibt sich die Funktionalität der Komponenten jeweils aus dem zahlengewichteten Mittel der Funktionalität der einzelnen Verbindungen. Eine mehrfunktionelle Verbindung enthält mindestens zwei der oben genannten funktionellen Gruppen pro Molekül.

### Komponente (a1)

Im erfindungsgemäßen Verfahren wird als Komponente (a1) mindestens ein mehrfunktionelles Isocyanat umgesetzt.

Im Rahmen des erfindungsgemäßen Verfahrens beträgt die eingesetzte Menge der Komponente (a1) vorzugsweise mindestens 20 Gew.-%, insbesondere mindestens 30 Gew.-%, besonders bevorzugt mindestens 40 Gew.-%, ganz besonders bevorzugt mindestens 55 Gew.-%, insbesondere mindestens 68 Gew.-%, jeweils bezogen auf das Gesamtgewicht der Komponenten (a1) bis (a4), welches 100 Gew.-% ergibt. Im Rahmen des erfindungsgemäßen Verfahrens beträgt die eingesetzte Menge der Komponente (a1) außerdem vorzugsweise höchstens 99,8 Gew.-%, insbesondere höchstens 99,3 Gew.-%, besonders bevorzugt höchstens 97,5 Gew.-%, jeweils bezogen auf das Gesamtgewicht der Komponenten (a1) bis (a4), welches 100 Gew.-% ergibt.

Als mehrfunktionelle Isocyanate kommen aromatische, aliphatische, cycloaliphatische und/oder araliphatische Isocyanate in Betracht. Derartige mehrfunktionelle Isocyanate sind an sich bekannt oder können nach an sich bekannten Methoden hergestellt werden. Die mehrfunktionellen Isocyanate können insbesondere auch als Mischungen eingesetzt werden, so dass die Komponente (a1) in diesem Fall verschiedene mehrfunktionelle Isocyanate enthält. Als Monomerbausteine (a1) in Betracht kommende mehrfunktionelle Isocyanate weisen zwei (im folgenden Diisocyanate genannt) oder mehr als zwei Isocyanatgruppen pro Molekül der Monomerkomponente auf.

Insbesondere geeignet sind 2,2'-, 2,4'- und/oder 4,4'-Diphenylmethandiisocyanat (MDI), 1,5-Naphthylendiisocyanat (NDI), 2,4- und/oder 2,6-Toluylendiisocyanat (TDI), 3,3'-Dimethyldiphenyldiisocyanat, 1,2-Diphenylethandiisocyanat und/oder p-Phenylendiisocyanat (PPDI), Tri-, Tetra-, Penta-, Hexa-, Hepta- und/oder Octamethylendiisocyanat, 2-Methylpentamethylen-1,5-diisocyanat, 2-Ethylbutylen-1,4-diisocyanat, Pentamethylen-1,5-diisocyanat, Butylen-1,4-diisocyanat, 1-Isocyanato-3,3,5-trimethyl-5-isocyanatomethyl-cyclohexan (Isophoron-diisocyanat, IPDI), 1,4- und/oder 1,3-Bis(isocyanatomethyl)cyclohexan (HXDI), 1,4-Cyclohexandiisocyanat, 1-Methyl-2,4- und/oder -2,6-cyclohexandiisocyanat und 4,4'-, 2,4'- und/oder 2,2'-Dicyclohexylmethandiisocyanat.

Als mehrfunktionelle Isocyanate (a1) sind aromatische Isocyanate bevorzugt. Besonders bevorzugt sind als mehrfunktionelle Isocyanate der Komponente (a1) folgende Ausführungsformen:
i) Mehrfunktionelle Isocyanate auf Basis von Toluylendiisocyanat (TDI), insbesondere 2,4-TDI oder 2,6-TDI oder Mischungen aus 2,4- und 2,6-TDI;
ii) Mehrfunktionelle Isocyanate auf Basis von Diphenylmethandiisocyanat (MDI), insbesondere 2,2'-MDI oder 2,4'-MDI oder 4,4'-MDI oder oligomeres MDI, das auch als Polyphenylpolymethylenisocyanat bezeichnet wird, oder Mischungen aus zwei oder drei der vorgenannten Diphenylmethandiisocyanate, oder Roh-MDI, welches bei der Herstellung von MDI anfällt, oder Mischungen aus mindestens einem Oligomer des MDI und mindestens einem der vorgenannten niedermolekularen MDI-Derivate;
iii) Gemische aus mindestens einem aromatischen Isocyanat gemäß Ausführungsform i) und mindestens einem aromatischen Isocyanat gemäß Ausführungsform ii).

Als mehrfunktionelles Isocyanat besonders bevorzugt ist oligomeres Diphenylmethandiisocyanat. Bei oligomerem Diphenylmethandiisocyanat (im folgenden oligomeres MDI genannt) handelt es sich um ein Gemisch aus mehreren oligomeren Kondensationsprodukten und somit Derivaten von Diphenylmethandiisocyanat (MDI). Die mehrfunktionellen Isocyanate können bevorzugt auch aus Mischungen von monomeren aromatischen Diisocyanaten und oligomerem MDI aufgebaut sein.

Oligomeres MDI enthält ein oder mehrere mehrkernige Kondensationsprodukte des MDI mit einer Funktionalität von mehr als 2, insbesondere 3 oder 4 oder 5. Oligomeres MDI ist bekannt und wird häufig als Polyphenylpolymethylenisocyanat oder auch als polymeres MDI bezeichnet. Oligomeres MDI ist üblicherweise aus einer Mischung aus MDI-basierten Isocyanaten mit unterschiedlicher Funktionalität aufgebaut. Üblicherweise wird oligomeres MDI im Gemisch mit monomerem MDI eingesetzt.

Die (mittlere) Funktionalität eines Isocyanates, welches oligomeres MDI enthält, kann im Bereich von ungefähr 2,2 bis ungefähr 5 variieren, insbesondere von 2,4 bis 3,5, insbesondere von 2,5 bis 3. Eine solche Mischung von MDI-basierten mehrfunktionellen Isocyanaten mit unterschiedlichen Funktionalitäten ist insbesondere das Roh-MDI, das bei der Herstellung von MDI, üblicherweise katalysiert durch Salzsäure, als Zwischenprodukt der Herstellung von Roh-MDI entsteht.

Mehrfunktionelle Isocyanate oder Mischungen mehrerer mehrfunktioneller Isocyanate auf Basis von MDI sind bekannt und werden beispielsweise von BASF Polyurethanes GmbH unter dem Namen Lupranat® vertrieben.

Vorzugsweise beträgt die Funktionalität der Komponente (a1) mindestens zwei, insbesondere mindestens 2,2 und besonders bevorzugt mindestens 2,4. Die Funktionalität der Komponente (a1) beträgt bevorzugt von 2,2 bis 4 und besonders bevorzugt von 2,4 bis 3.

Vorzugsweise beträgt der Gehalt an Isocyanatgruppen der Komponente (a1) von 5 bis 10 mmol/g, insbesondere von 6 bis 9 mmol/g, besonders bevorzugt von 7 bis 8,5 mmol/g. Dem Fachmann ist bekannt, dass der Gehalt an Isocyanatgruppen in mmol/g und das sogenannte Äquivalenzgewicht in g/Äquivalent in einem reziproken Verhältnis stehen. Der Gehalt an Isocyanatgruppen in mmol/g ergibt sich aus dem Gehalt in Gew.-% nach ASTM D-5155-96 A.

In einer bevorzugten Ausführungsform besteht die Komponente (a1) aus mindestens einem mehrfunktionellen Isocyanat ausgewählt aus Diphenylmethan-4,4'-diisocyanat, Diphenylmethan-2,4'-diisocyanat, Diphenylmethan-2,2'-diisocyanat und oligomerem Diphenylmethandiisocyanat. Im Rahmen dieser bevorzugten Ausführungsform enthält die Komponente (a1) besonders bevorzugt oligomeres Diphenylmethandiisocyanat und weist eine Funktionalität von mindestens 2,5 auf.

Die Viskosität der eingesetzten Komponente (a1) kann in einem weiten Bereich variieren. Vorzugsweise weist die Komponente (a1) eine Viskosität von 100 bis 3000 mPa.s, besonders bevorzugt von 200 bis 2500 mPa.s, auf.

### Komponente (a2)

Erfindungsgemäß ist Komponente (a2) mindestens ein mehrfunktionelles aromatisches Amin.

Komponente (a2) kann teilweise in situ erzeugt werden. In einer solchen Ausführungsform wird die Umsetzung im Rahmen von Schritt (a) in Gegenwart von Wasser (a3) durchgeführt. Wasser reagiert mit den Isocyanatgruppen zu Aminogruppen unter Freisetzung von CO₂. Somit werden mehrfunktionelle Amine teilweise als Zwischenprodukt (in situ) erzeugt. Sie werden im weiteren Verlauf der Umsetzung mit Isocyanatgruppen zu Harnstoffverknüpfungen umgesetzt.

In dieser bevorzugten Ausführungsform wird die Umsetzung in Gegenwart von Wasser und einem mehrfunktionellen aromatischen Amin als Komponente (a2) sowie optional in Gegenwart eines Katalysators (a5) durchgeführt.

In einer weiteren, ebenfalls bevorzugten Ausführungsform wird die Umsetzung von Komponente (a1) und einem mehrfunktionellen aromatischen Amin als Komponente (a2) optional in Gegenwart eines Katalysators (a5) durchgeführt. Dabei ist kein Wasser (a3) anwesend.

Mehrfunktionelle aromatische Amine sind dem Fachmann an sich bekannt. Unter mehrfunktionellen Aminen sind solche zu verstehen, welche mindestens zwei gegenüber Isocyanaten reaktive Aminogruppen pro Molekül aufweisen. Gegenüber Isocyanaten reaktiv sind dabei primäre und sekundäre Aminogruppen, wobei die Reaktivität der primären Aminogruppen im Allgemeinen deutlich höher ist als die der sekundären.

Die mehrfunktionellen aromatischen Amine sind vorzugsweise zweikernige aromatische Verbindungen mit zwei primären Aminogruppen (bifunktionelle aromatische Amine), entsprechende drei - oder mehrkernige aromatische Verbindungen mit mehr als zwei primären Aminogruppen oder Mischungen aus den vorgenannten Verbindungen. Nach der vorliegenden Erfindung sind die mehrfunktionelle Amine aus der Gruppe bestehend aus Isomeren und Derivaten von Diaminodiphenylmethan ausgewählt.

Die genannten bifunktionellen zweikernigen aromatischen Amine sind besonders bevorzugt solche gemäß der allgemeinen Formel I, 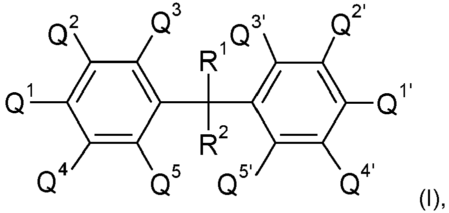 wobei R¹ und R² gleich oder unterschiedlich sein können und unabhängig voneinander ausgewählt werden aus Wasserstoff und linearen oder verzweigten Alkylgruppen mit von 1 bis 6 Kohlenstoffatomen und wobei sämtliche Substituenten Q¹ bis Q⁵ und Q^{1'} bis Q^{5'} gleich oder unterschiedlich sind und unabhängig voneinander ausgewählt werden aus Wasserstoff, einer primären Aminogruppe und einer linearen oder verzweigten Alkylgruppe mit von 1 bis 12 Kohlenstoffatomen, wobei die Alkylgruppe weitere funktionelle Gruppen tragen kann, unter der Voraussetzung, dass die Verbindung gemäß der allgemeinen Formel I mindestens zwei primäre Aminogruppen umfasst, wobei zumindest eines aus Q¹, Q³ und Q⁵ eine primäre Aminogruppe ist und zumindest eines aus Q^{1'}, Q^{3'} und Q^{5'} eine primäre Aminogruppe ist.

In einer Ausführungsform werden die Alkylgruppen im Rahmen der Substituenten Q gemäß der allgemeinen Formel I ausgewählt aus Methyl, Ethyl, n-Propyl, iso-Propyl, n-Butyl, sek-Butyl und tert-Butyl. Derartige Verbindungen werden nachfolgende als substituierte aromatische Amine (a2-s) bezeichnet. Allerdings ist es ebenfalls bevorzugt, wenn alle Substituenten Q Wasserstoff darstellen, sofern sie nicht wie oben definiert Aminogruppen sind (sogenannte nicht substituierte mehrfunktionelle aromatische Amine).

Bevorzugt sind R¹ und R² im Rahmen der allgemeinen Formel I gleich oder unterschiedlich und werden unabhängig voneinander ausgewählt aus Wasserstoff, einer primären Aminogruppe und einer linearen oder verzweigten Alkylgruppe mit von 1 bis 6 Kohlenstoffatomen. Vorzugsweise werden R¹ und R² ausgewählt aus Wasserstoff und Methyl. Besonders bevorzugt gilt R¹ = R² = H.

Geeignete mehrfunktionelle aromatische Amine (a2) sind außerdem insbesondere Isomere und Derivate von Toluoldiamin. Im Rahmen von Komponente (a2) bevorzugte Isomere und Derivate von Toluoldiamin sind insbesondere Toluol-2,4-diamin und/oder Toluol-2,6-diamin und Diethyltoluoldiamine, insbesondere 3,5-Diethyltoluol-2,4-diamin und/oder 3,5-Diethyltoluol-2,6-diamin.

Ganz besonders bevorzugt umfasst Komponente (a2) mindestens ein mehrfunktionelles aromatisches Amin ausgewählt aus 4,4'-Diaminodiphenylmethan, 2,4'-Diaminodiphenylmethan, 2,2'-Diaminodiphenylmethan und oligomerem Diaminodiphenylmethan.

Oligomeres Diaminodiphenylmethan enthält ein oder mehrere mehrkernige Methylenverbrückte Kondensationsprodukte von Anilin und Formaldehyd. Oligomeres MDA enthält mindestens ein, im Allgemeinen jedoch mehrere Oligomere des MDA mit einer Funktionalität von mehr als 2, insbesondere 3 oder 4 oder 5. Oligomeres MDA ist bekannt oder kann nach an sich bekannten Methoden hergestellt werden. Üblicherweise wird oligomeres MDA in Form von Mischungen mit monomerem MDA eingesetzt.

Die (mittlere) Funktionalität eines mehrfunktionellen Amins der Komponente (a2), welches oligomeres MDA enthält, kann im Bereich von ungefähr 2,3 bis ungefähr 5 variieren, insbesondere von 2,3 bis 3,5 und insbesondere von 2,3 bis 3. Eine solche Mischung von MDA-basierten mehrfunktionellen Aminen mit unterschiedlichen Funktionalitäten ist insbesondere das Roh-MDA, das insbesondere bei der Kondensation von Anilin mit Formaldehyd, üblicherweise katalysiert durch Salzsäure, als Zwischenprodukt der Herstellung von Roh-MDI entsteht.

Besonders bevorzugt enthält das mindestens eine mehrfunktionelle aromatische Amin Diaminodiphenylmethan oder ein Derivat von Diaminodiphenylmethan. Besonders bevorzugt enthält das mindestens eine mehrfunktionelle aromatische Amin oligomeres Diaminodiphenylmethan. Besonders bevorzugt ist, wenn die Komponente (a2) oligomeres Diaminodiphenylmethan als Verbindung (a2) enthält und insgesamt eine Funktionalität von mindestens 2,1 aufweist. Insbesondere enthält die Komponente (a2) oligomeres Diaminodiphenylmethan und weist eine Funktionalität von mindestens 2,4 auf.

Es ist im Rahmen der vorliegenden Erfindung möglich, die Reaktivität der primären Aminogruppen zu steuern, indem substituierte mehrfunktionelle aromatische Amine im Rahmen von Komponente (a2) verwendet werden. Die genannten und nachfolgend ausgeführten substituierten mehrfunktionellen aromatischen Amine, nachfolgend mit (a2-s) bezeichnet, können in Mischung mit den oben genannten (nicht substituierten) Diaminodiphenylmethanen (alle Q in Formel I Wasserstoff, sofern nicht NH₂) oder auch ausschließlich eingesetzt werden.

In dieser Ausführungsform wird Q², Q⁴, Q^{2'} und Q^{4'} im Rahmen der oben dargestellten Formel I einschließlich den dazugehörigen Definitionen vorzugsweise so gewählt, dass die Verbindung gemäß der allgemeinen Formel I mindestens eine lineare oder verzweigte Alkylgruppe, die weitere funktionelle Gruppen tragen kann, mit von 1 bis 12 Kohlenstoffatomen in α-Position zu mindestens einer an den aromatischen Kern gebundenen primären Aminogruppe aufweist.

Vorzugsweise werden Q², Q⁴, Q^{2'} und Q^{4'} in dieser Ausführungsform so gewählt, dass das substituierte aromatische Amin (a2-s) mindestens zwei primäre Aminogruppen umfasst, die jeweils eine oder zwei lineare oder verzweigte Alkylgruppen mit von 1 bis 12 Kohlenstoffatomen in α-Position aufweisen, die weitere funktionelle Gruppen tragen können. Sofern eines oder mehrere aus Q², Q⁴, Q^{2'} und Q^{4'} so gewählt werden, dass sie lineare oder verzweigte Alkylgruppen mit von 1 bis 12 Kohlenstoffatomen entsprechen, die weitere funktionelle Gruppen tragen, dann sind Aminogrupppen und/oder Hydroxygruppen und/oder Halogenatome als solche funktionelle Gruppen bevorzugt.

Vorzugsweise werden die Amine (a2-s) ausgewählt aus der Gruppe bestehend aus 3,3',5,5'-Tetraalkyl-4,4'-diaminodiphenylmethan, 3,3',5,5'-Tetraalkyl-2,2'-diaminodiphenylmethan und 3,3',5,5'-Tetraalkyl-2,4'-diaminodiphenylmethan, wobei die Alkylgruppen in 3,3',5 und 5'-Position gleich oder unterschiedlich sein können und unabhängig voneinander ausgewählt werden aus linearen oder verzweigten Alkylgruppen mit von 1 bis 12 Kohlenstoffatomen, die weitere funktionelle Gruppen tragen können. Vorzugsweise sind vorgenannte Alkylgruppen Methyl, Ethyl, n-Propyl, i-Propyl, n-Butyl, sek-Butyl oder t-Butyl (jeweils unsubstituiert).

In einer Ausführungsform können eines, mehrere oder alle Wasserstoffatome einer oder mehrerer Alkylgruppen der Substituenten Q durch Halogenatome, insbesondere Chlor, ersetzt sein. Alternativ können eines, mehrere oder alle Wasserstoffatome einer oder mehrerer Alkylgruppen der Substituenten Q durch NH₂ oder OH ersetzt sein. Es ist jedoch bevorzugt, wenn die Alkylgruppen im Rahmen der allgemeinen Formel I aus Kohlenstoff und Wasserstoff aufgebaut sind.

In einer besonders bevorzugten Ausführungsform umfasst Komponente (a2-s) 3,3',5,5'-Tetraalkyl-4,4'-diaminodiphenylmethan, wobei die Alkylgruppen gleich oder unterschiedlich sein können und unabhängig ausgewählt werden aus linearen oder verzweigten Alkylgruppen mit von 1 bis 12 Kohlenstoffatomen, die optional funktionelle Gruppen tragen können. Vorzugsweise werden vorgenannte Alkylgruppen ausgewählt aus unsubstituierten Alkylgruppen, insbesondere Methyl, Ethyl, n-Propyl, iso-Propyl, n-Butyl, sek-Butyl und tert-Butyl, besonders bevorzugt aus Methyl und Ethyl. Ganz besonders bevorzugt sind 3,3',5,5'-Tetraethyl-4,4'-diaminodiphenylmethan und/oder 3,3'-5,5'-Tetramethyl-4,4'-diaminodiphenylmethan.

Die vorgenannten mehrfunktionellen Amine der Komponente (a2) sind dem Fachmann an sich bekannt oder können nach bekannten Methoden hergestellt werden. Eine der bekannten Methoden ist die Umsetzung von Anilin beziehungsweise von Derivaten des Anilins mit Formaldehyd unter saurer Katalyse.

Wie oben erläutert, kann Wasser als Komponente (a3) ganz oder teilweise das mehrfunktionelle aromatische Amin ersetzen, indem es mit einer dann vorab berechneten Menge an zusätzlichem mehrfunktionellen aromatischem Isocyanat der Komponente (a1) in situ zu einem entsprechenden mehrfunktionellen aromatischen Amin reagiert. Sofern als Komponente (a3) Wasser verwendet wird, sind wie nachfolgend ausgeführt vorzugsweise bestimmte Randbedingungen einzuhalten.

Wie bereits oben ausgeführt, reagiert Wasser mit den Isocyanatgruppen zu Aminogruppen unter Freisetzung von CO₂. Somit werden mehrfunktionelle Amine teilweise als Zwischenprodukt (in situ) erzeugt. Sie werden im weiteren Verlauf der Umsetzung mit Isocyanatgruppen zu Harnstoffverknüpfungen umgesetzt. Das gebildete CO₂ darf die Gelierung jedoch nicht so stark stören, dass die Struktur des resultierenden porösen Materials in unerwünschter Weise beeinflusst wird. Hieraus ergibt sich die oben ausgeführte bevorzugte Obergrenze für den Wassergehalt bezogen auf das Gesamtgewicht der Komponenten (a1) bis (a4), der vorzugsweise höchstens 30 Gew.-%, besonders bevorzugt höchstens 25 Gew.-%, insbesondere höchstens 20 Gew.-% beträgt. Ein Wassergehalt in diesem Bereich führt darüber hinaus zu dem Vorteil, dass etwaiges Restwasser nach erfolgter Gelierung nicht aufwendig durch Trocknung entfernt werden muss.

Sofern als Komponente (a3) Wasser eingesetzt wird, beträgt die bevorzugt eingesetzte Menge Wasser von 0,1 bis 30 Gew.-%, insbesondere von 0,2 bis 25 Gew.-%, besonders bevorzugt von 0,5 bis 20 Gew.-%, jeweils bezogen auf das Gesamtgewicht der Komponenten (a1) bis (a4), welches 100 Gew.-% ergibt.

Die bevorzugte Menge Wasser ist innerhalb der dargelegten Bereiche davon abhängig, ob ein Katalysator (a5) verwendet wird oder nicht.

In einer ersten Variante, welche die Verwendung von Wasser umfasst, erfolgt die Umsetzung der Komponenten (a1) und (a2) ohne die Anwesenheit eines Katalysators (a5). In dieser ersten Ausführungsform hat es sich als vorteilhaft herausgestellt, von 5 bis 30 Gew.-%, insbesondere von 6 bis 25 Gew.-%, besonders bevorzugt von 8 bis 20 Gew.-% Wasser als Komponente (a3) jeweils bezogen auf das Gesamtgewicht der Komponenten (a1) bis (a4), welches 100 Gew.-% ergibt, einzusetzen.

Im Rahmen dieser ersten Ausführungsform werden die vorgenannten Komponenten (a1) bis (a3) vorzugsweise in folgendem Verhältnis eingesetzt, jeweils bezogen auf das Gesamtgewicht der Komponenten (a1) bis (a3), welches 100 Gew.-% ergibt: von 40 bis 94,9 Gew.-%, insbesondere von 55 bis 93,5 Gew.-%, besonders bevorzugt von 68 bis 90 Gew.-% der Komponente (a1), von 0,1 bis 30 Gew.-%, insbesondere von 0,5 bis 20 Gew.-%, besonders bevorzugt von 2 bis 12 Gew.-% mehrfunktionelle aromatische Amine (a2) und von 5 bis 30 Gew.-%, insbesondere von 6 bis 25, besonders bevorzugt von 8 bis 20 Gew.-% Wasser (a3).

Aus dem Wassergehalt und dem Gehalt reaktiver Isocyanatgruppen der Komponente (a1) ergibt sich ein rechnerischer Gehalt an Aminogruppen, indem man von einer vollständigen Umsetzung des Wassers mit den Isocyanatgruppen der Komponente (a1) unter Bildung einer entsprechenden Menge Aminogruppen ausgeht und diesen Gehalt zum Gehalt resultierend aus Komponente (a2) addiert (insgesamt n^{Amin}). Das hieraus resultierende Einsatzverhältnis der rechnerisch verbleibenden NCO-Gruppen n^{NCO} im Verhältnis zu den rechnerisch gebildeten sowie eingesetzten Aminogruppen wird nachfolgend als rechnerisches Einsatz-Verhältnis n^{NCO}/n^{Amin} bezeichnet und ist ein Äquivalenzverhältnis, d. h. ein molares Verhältnis der jeweiligen funktionellen Gruppen.

Im Rahmen der vorstehend genannten ersten Variante kann das rechnerische Einsatz-Verhältnis (Äquivalenzverhältnis) n^{NCO}/n^{Amin} über einen weiten Bereich variieren und insbesondere von 0,6 bis 5 betragen. n^{NCO}/n^{Amin} beträgt vorzugsweise von 1 bis 1,6, insbesondere von 1,1 bis 1,4.

In einer zweiten, bevorzugten Variante, welche die Verwendung von Wasser umfasst, erfolgt die Umsetzung der Komponenten (a1) bis (a3) in Anwesenheit eines Katalysators (a5). In dieser zweiten Ausführungsform hat es sich als vorteilhaft herausgestellt, von 0,1 bis 15 Gew.-%, insbesondere von 0,2 bis 15 Gew.-%, besonders bevorzugt von 0,5 bis 12 Gew.-% Wasser (a3), jeweils bezogen auf das Gesamtgewicht der Komponenten (a1) bis (a3), welches 100 Gew.-% ergibt, einzusetzen. In den vorgenannten Bereichen ergeben sich besonders günstige mechanische Eigenschaften der resultierenden porösen Materialien, was durch eine besonders günstige Netzwerkstruktur begründet ist. Eine höhere Menge an Wasser wirkt sich negativ auf die Netzwerkstruktur aus und ist in Bezug auf die Endeigenschaften des porösen Materials von Nachteil.

Im Rahmen der bevorzugten zweiten Variante werden die vorgenannten Komponenten (a1) bis (a3) vorzugsweise in folgendem Verhältnis eingesetzt, jeweils bezogen auf das Gesamtgewicht der Komponenten (a1) (a3), welches 100 Gew.-% ergibt: von 55 bis 99,8 Gew.-%, insbesondere von 65 bis 99, 3 Gew.-%, besonders bevorzugt von 76 bis 97,5 Gew.-% der Komponente (a1), von 0,1 bis 30 Gew.-%, insbesondere von 0,5 bis 20 Gew.-%, besonders bevorzugt von 2 bis 12 Gew.-% mehrfunktionelles aromatisches Amin (a2) und von 0,1 bis 15 Gew.-%, insbesondere von 0,2 bis 15, besonders bevorzugt von 0,5 bis 12 Gew.-% Wasser (a3).

Gemäß der vorstehend genannten zweiten Variante beträgt das rechnerische Einsatz-Verhältnis (Äquivalenzverhältnis) n^{NCO}/n^{Amin} bevorzugt von 1,01 bis 5. Besonders bevorzugt beträgt das genannte Äquivalenzverhältnis von 1,1 bis 3, insbesondere von 1,1 bis 2. Ein Überschuss n^{NCO} gegenüber n^{Amin} führt in dieser Ausführungsform zu einer geringeren Schrumpfung des porösen Materials, insbesondere Xerogel, bei der Entfernung des Lösungsmittels sowie durch synergistische Zusammenwirkung mit dem Katalysator (a5) zu einer verbesserten Netzwerkstruktur und zu verbesserten Endeigenschaften des resultierenden porösen Materials.

In einer weiteren bereits oben erläuterten zweiten bevorzugten Ausführungsform erfolgt die Umsetzung gemäß Schritt (a) in Abwesenheit von Wasser. Im Rahmen dieser bevorzugten Ausführungsform werden die oben ausgeführten Komponenten (a1) und (a2) vorzugsweise in folgendem Verhältnis eingesetzt, jeweils bezogen auf das Gesamtgewicht der Komponenten (a1) und (a2), welches 100 Gew.-% ergibt: von 20 bis 80 Gew.-%, insbesondere von 25 bis 75 Gew.-%, besonders bevorzugt von 35 bis 68 Gew.-% der Komponente (a1), von 20 bis 80 Gew.-%, insbesondere von 25 bis 75 Gew.-%, besonders bevorzugt von 32 bis 65 Gew.-% Komponente (a2); kein (a3).

Im Rahmen dieser vorstehend ausgeführten Ausführungsform beträgt das Einsatz-Verhältnis (Äquivalenzverhältnis) n^{NCO}/n^{Amin} bevorzugt von 1,01 bis 5. Besonders bevorzugt beträgt das genannte Äquivalenzverhältnis von 1,1 bis 3, insbesondere von 1,1 bis 2. Ein Überschuss n^{NCO} gegenüber n^{Amin} führt auch in dieser Ausführungsform zu einer geringeren Schrumpfung des porösen Materials, insbesondere Xerogel, bei der Entfernung des Lösungsmittels sowie durch synergistische Zusammenwirkung mit dem Katalysator (a5) zu einer verbesserten Netzwerkstruktur und zu verbesserten Endeigenschaften des resultierenden porösen Materials.

Die Komponenten (a1) bis (a3) werden nachfolgend gemeinsam als organische Gelvorstufe (A) bezeichnet.

### Komponente (a4)

Erfindungsgemäß erfolgt (a) die Umsetzung der Komponenten (a1) und (a2) in Gegenwart mindestens eines organischen Flammschutzmittels als Komponente (a4).

Vorzugsweise sind die Flammschutzmittel der Komponente (a4) Verbindungen enthaltend Phosphor und/oder Halogen, insbesondere Brom. Es können jedoch auch Flammschutzmittel auf Basis von Bor verwendet werden.

Komponente (a4) wird vorzugsweise in Mengen von 0,1 bis 25 Gew.-%, bevorzugt von 1 bis 15 Gew.-%, jeweils bezogen auf die Gewichtsmenge aus Komponente (a1) bis (a4), eingesetzt, welche 100 Gew.-% ergibt. In diesem Bereich resultieren besonders gute Flammschutzeigenschaften einerseits und eine günstige Porenstruktur andererseits. Die genannten bevorzugten Bereiche gelten für alle weiter oben ausgeführten Ausführungsformen in Bezug auf die Komponenten (a1) bis (a3).

Vorzugsweise enthält Komponente (a4) mindestens ein Flammschutzmittel, das ausgewählt wird aus der Gruppe bestehend aus polybromierten Verbindungen und organischen Phosphorverbindungen.

Polybromierte Verbindungen sind alle Verbindungen, die mindestens zwei Bromatome pro Molekül enthalten. Bevorzugte polybromierte Verbindungen sind insbesondere: Pentabromtoluol, Pentabromphenylallylether, Pentabromethylbenzol, Decabromdiphenyl, Pentabromdiphenyloxid, Octabromdiphenyloxid, Decabromdiphenyloxid, Ethylen-bis(tetrabromphthalimid), Tetradecabromdiphenoxybenzol, Ester-Ether von Tetrabromphthalsäureanhydrid, Tetrabromneopentylglykol und seine Derivate.

Organische Phosphorverbindungen sind Verbindungen, die mindestens ein Phosphoratom und mindestens ein Kohlenstoffatom enthalten, insbesondere organische Phosphate, Phosphonate, Phosphinate, Phosphite, Phosphonite, Phosphinite und Phosphinoxide.

Im Rahmen der vorliegenden Erfindung bevorzugte organische Phosphorverbindungen sind insbesondere solche mit einer P=O-Doppelbindung, insbesondere Organophosphate, Organophosphonate und Organophosphinoxide. Die Vorsilbe Organo kennzeichnet dabei das Vorliegen einer organischen Verbindung in oben genanntem Sinne, und ist nicht auf das Vorliegen einer C-P-Bindung beschränkt.

Unter Organophosphat sind organische Verbindungen zu verstehen, in denen die P-OH-Gruppen der Phophorsäure durch P-OR ersetzt sind, wobei jedes R gleich oder unterschiedlich sein kann und unabhängig voneinander einen organischen Rest darstellt, insbesondere eine Kohlenwasserstoffgruppe, die aliphatisch, araliphatisch oder aromatisch sein kann und die weitere funktionelle Gruppen enthalten kann.

Unter Organophosphonat sind organische Verbindungen zu verstehen, in denen die P-OH-Gruppen der Phosphonsäure durch P-OR und die P-H-Gruppen durch P-R ersetzt sind, wobei jedes R gleich oder unterschiedlich sein kann und unabhängig voneinander einen organischen Rest darstellt, insbesondere eine Kohlenwasserstoffgruppe, die aliphatisch, araliphatisch oder aromatisch sein kann und die weitere funktionelle Gruppen enthalten kann.

Unter Organophosphinoxid sind organische Verbindungen der Struktur R₃P=O zu verstehen, wobei jedes R gleich oder unterschiedlich sein kann und unabhängig voneinander einen organischen Rest darstellt, insbesondere eine Kohlenwasserstoffgruppe, die aliphatisch, araliphatisch oder aromatisch sein kann und die weitere funktionelle Gruppen enthalten kann.

In einer ersten bevorzugten Ausführungsform umfasst Komponente (a4) mindestens ein Organophosphat. Bevorzugte Organophosphorsäurederivate sind solche der Struktur OP(OR)₃, wobei jedes R unabhängig voneinander eine aliphatische, araliphatische oder aromatische Kolhlenwasserstoffgruppe mit von 1 bis 20 Kohlenstoffatomen ist, die weitere funktionelle Gruppen tragen kann, wie zum Beispiel Etherverknüpfungen, Halogenatome sowie gegenüber Isocyanate reaktive Gruppen, insbesondere OH-Gruppen und/oder NH₂-Gruppen.

Bevorzugte Organophosphate sind insbesondere Triaryl- und Trialkylphosphate wie Diphenylkresylphosphat, Trikresylphosphat, Triethylphosphat, 2-Ethylhexyldiphenylphosphat und Phosphorsäure-1,3-phenylen-tetraphenylester sowie Tris-(2-chlorpropyl)-phosphat.

In einer weiteren bevorzugten Ausführungsform umfasst Komponente (a4) mindestens ein Organophosphonat.

Bevorzugte Organophosphonate sind solche der Struktur RPO(OR)₂, wobei jedes R unabhängig voneinander eine aliphatische, araliphatische oder aromatische Kohlenwasserstoffgruppe mit von 1 bis 20 Kohlenstoffatomen ist, die weitere funktionelle Gruppen tragen kann, wie zum Beispiel Etherverknüpfungen, Halogenatome sowie gegenüber Isocyanate reaktive Gruppen, insbesondere OH-Gruppen und/oder NH₂-Gruppen.

Bevorzugte Organophosphonate sind insbesondere Triaryl- und Trialkylphosphonate, Diethyl-N,N-bis(2-hydroxyethyl)aminomethylphosphonat, Tetraalkyldiphosphonatverbindungen, Dimethylmethanphosphonat, Diethylethanphosphonat und dergleichen, sowie Phosphorpolyole und oxalkylierten Alkylphosphonsäurederivate.

In einer weiteren bevorzugten Ausführungsform umfasst Komponente (a4) mindestens ein Organophosphinsäurederivat.

Bevorzugte Organophosphinoxide sind solche der Struktur OPR₃, wobei jedes R unabhängig voneinander eine aliphatische, araliphatische oder aromatische Kohlenwasserstoffgruppe mit von 1 bis 20 Kohlenstoffatomen ist, die weitere funktionelle Gruppen tragen kann, wie zum Beispiel Etherverknüpfungen, Halogenatome sowie gegenüber Isocyanate reaktive Gruppen, wie zum Beispiel Etherverknüpfungen, Halogenatome sowie gegenüber Isocyanate reaktive Gruppen, insbesondere OH-Gruppen und/oder NH₂-Gruppen. Bevorzugte Organophosphinoxide sind insbesondere Bis(hydroxymethyl)isobutylphosphinoxid, Bis(3-hydroxypropyl)isobutylphosphinoxid, Triethylphosphinoxid, Dimethyldecylphosphinoxid, Tributylphosphinoxid, Tris(2-ethylhexyl)phosphinoxid, Methyldiphenylphosphinoxid, Trioctylphosphinoxid ,Triphenylphosphinoxid und Tris(2-methylphenyl)phosphinoxid.

Vorgenannte Flammschutzmittel können einzeln oder als Kombination von zwei oder mehreren der vorgenannten Verbindungen eingesetzt werden.

Die Flammschutzmittel können wie weiter oben ausgeführt ein oder mehrere funktionelle Gruppen enthalten.

In einer Ausführungsform ist es bevorzugt, wenn Komponente (a4) mindestens eine Verbindung umfasst, welche eine gegenüber Isocyanaten reaktive funktionelle Gruppe enthält, insbesondere mindestens 2 solcher reaktiver funktioneller Gruppen. Bevorzugte reaktive Gruppen sind OH und primäre und sekundäre Aminogruppen. Primäre und sekundäre Aminogruppen sind gegenüber der Komponente (a1) der vorliegenden Erfindung reaktiv und werden somit in die entstehende Netzwerkstruktur eingebaut. Zwar sind auch OH-Gruppen gegenüber Isocyanaten reaktiv, jedoch nur in geringerem Umfang, so dass vorhandene Amine zuerst umgesetzt werden. Die Reaktivität der OH-Gruppen kann durch Verwendung eines geeigneten Katalysators (a5), welcher die Urethanbildungsreaktion beschleunigt, erhöht werden.

Besonders bevorzugte Flammschutzmittel sind folgende: Tris(2-chlor-1-methylethyl)phosphat, Diethylethylphosphonat, Dimethylpropylphosphonat, Tri(isopropylphenyl)phosphat (Reofos 95), Oligomere Chloroalkylphosphatester (Fyrol 99), Resorcinol-bis(diphenylphosphate), 2-(2-Hydroxyethoxy)ethyl-2-hydroxypropyl-3,4,5,6-tetrabromphthalat, Bis(hydroxymethyl)isobutylphosphinoxid, Bis(3-hydroxypropyl)isobutylphosphinoxid und Trioctylphosphinoxid.

### Katalysator (a5)

In einer ersten bevorzugten Ausführungsform wird das erfindungsgemäße Verfahren vorzugsweise in Gegenwart mindestens eines Katalysators als Komponente (a5) durchgeführt.

Als Katalysatoren kommen im Prinzip alle dem Fachmann bekannten Katalysatoren in Betracht, welche die Trimerisierung von Isocyanaten (sogenannte Trimerisierungskatalysatoren) und/oder die Umsetzung von Isocyanaten mit Aminogruppen oder OH-Gruppen (sogenannte Gelkatalysatoren) und/oder - sofern eine Komponente (a3), d. h. Wasser verwendet wird - die Umsetzung von Isocyanaten mit Wasser (sogenannte Treibkatalysatoren) beschleunigen.

Die entsprechenden Katalysatoren sind an sich bekannt und weisen unterschiedliche Ausprägungen hinsichtlich der oben genannten drei Reaktionen auf. Je nach Ausprägung können sie somit ein oder mehrerer der vorgenannten Typen zugeordnet werden. Dem Fachmann ist darüber hinaus bekannt, dass auch andere Reaktionen als die oben genannten auftreten können.

Entsprechende Katalysatoren lassen sich unter anderem anhand ihres Gel- zu Treib-Verhältnisses charakterisieren, wie z.B. bekannt aus Polyurethane, 3. Auflage, G. Oertel, Hanser Verlag, München, 1993, Seiten 104 bis 110.

Sofern keine Komponente (a3), d. h. kein Wasser verwendet wird, weisen bevorzugte Katalysatoren eine signifikante Aktivität hinsichtlich der Trimerisierung auf. Hierdurch wird die Homogenität der Netzwerkstruktur günstig beeinflusst, woraus besonders günstige mechanische Eigenschaften resultieren. Sofern reaktive (einbaubare) Katalysatoren verwendet werden, weisen bevorzugte Katalysatoren auch eine signifikante Aktivität in Bezug auf die Katalysierung der Urethanbildungsreaktion auf (Gelreaktion).

Sofern Wasser (a3) verwendet wird, weisen bevorzugte Katalysatoren (a5) ein ausgewogenes Gel- zu Treibverhältnis auf, so dass die Reaktion der Komponente (a1) mit Wasser nicht zu stark beschleunigt wird und zu einer negativen Beeinflussung der Netzwerkstruktur führt und gleichzeitig eine kurze Gelierungszeit resultiert, so dass die Entformungszeit vorteilhaft gering ist. Bevorzugte Katalysatoren weisen gleichzeitig eine signifikante Aktivität hinsichtlich der Trimerisierung auf. Hierdurch wird die Homogenität der Netzwerkstruktur günstig beeinflusst, woraus besonders günstige mechanische Eigenschaften resultieren.

Die Katalysatoren können ein Monomerbaustein (einbaubarer Katalysator) oder nichteinbaubar sein.

Die Komponente (a5) wird zweckmäßigerweise in der geringsten wirksamen Menge eingesetzt. Vorzugsweise Anwendung finden Mengen von 0,01 bis 5 Gew.-teile, insbesondere von 0,1 bis 3 Gew.- teile, besonders bevorzugt von 0,2 bis 2,5 Gew.- teile der Komponente (a5) bezogen auf insgesamt 100 Gew.-teile der Komponenten (a1) bis (a4).

Im Rahmen von Komponente (a5) bevorzugte Katalysatoren werden ausgewählt aus der Gruppe bestehend aus primären, sekundären und tertiären Aminen, Triazinderivaten, Organometallverbindungen, Metallchelaten, quaternäre Ammoniumsalzen, Ammoniumhydroxiden sowie Alkali- und Erdalkali-Hydroxiden, -alkoxiden und -carboxylaten.

Geeignete Katalysatoren sind insbesondere starke Basen, beispielsweise quaternäre Ammoniumhydroxide, wie z. B. Tetraalkylammoniumhydroxide mit 1 bis 4 C-Atomen im Alkylrest und Benzyltrimethylammoniumhydroxid, Alkalimetallhydroxide, wie z. B. Kalium- oder Natriumhydroxid und Alkalimetallalkoxide, wie z. B. Natriummethylat, Kalium- und Natriumethylat und Kaliumisopropylat.

Geeignete Katalysatoren sind außerdem insbesondere Alkalimetallsalze von Carbonsäuren, wie z. B. Kaliumformiat, Natrium-, Kaliumacetat, Kalium-2-ethylhexanoat, Kaliumadipat und Natriumbenzoat, Alkalisalze von langkettigen Fettsäuren mit 8 bis 20, insbesondere 10 bis 20 C-Atomen und gegebenenfalls seitenständigen OH-Gruppen.

Geeignete Katalysatoren sind außerdem insbesondere N-Hydroxyalkyl-quarternärammoniumcarboxylate, wie z.B. Trimethylhydroxypropylammoniumformiat.

Organometallverbindungen sind dem Fachmann insbesondere als Gelkatalysatoren an sich bekannt und sind als Katalysatoren (a5) ebenfalls geeignet. Organozinnverbindungen wie z.B. Zinn-2-ethylhexanoate und Dibutylzinndilaurate sind im Rahmen von Komponente (a5) bevorzugt.

Tertiäre Amine sind dem Fachmann als Gelkatalysatoren und als Trimerisierungskatalysatoren an sich bekannt. Tertiäre Amine sind als Katalysatoren (a5) besonders bevorzugt. Bevorzugte tertiäre Amine sind insbesondere N,N-Dimethylbenzylamin, N,N'-Dimethylpiperazin, N,N-Dimethylcyclohexylamin, N,N',N"-Tris-(dialkylaminoalkyl)-s-hexahydrotriazine, wie z. B. N,N',N"-Tris(dimethylaminopropyl)-s-hexahydrotriazin, Tris-(dimethylaminomethyl)phenol, Bis(2-dimethylaminoethyl)ether, N,N,N,N,N-Pentamethyldiethylentriamin, Methylimidazol, 1,2-Dimethylimidazol, Dimethylbenzylamin, 1,6-Diazabicyclo-[5.4.0]-undecen-7, Triethylamin, Triethylendiamin (IUPAC: 1,4-Diazabicyclo[2,2,2]octan), Dimethylaminoethanolamin, Dimethylaminopropylamin, N,N-Dimethylaminoethoxyethanol, N,N,N-Trimethylaminoethylethanolamin, Triethanolamin, Diethanolamin, Triisopropanolamin und Diisopropanolamin.

Im Rahmen von Komponente (a5) besonders bevorzugte Katalysatoren werden ausgewählt aus der Gruppe bestehend aus N,N-Dimethylcyclohexylamin, Bis(2-dimethylaminoethyl)ether, N,N,N,N,N-Pentamethyldiethylentriamin, Methylimidazol, 1,2-Dimethylimidazol, Dimethylbenzylamin, 1,6-Diazabicyclo-5,4,0-undecen-7, Trisdimethylaminopropylhexahydrotriazin, Triethylamin, Tris-(dimethylaminomethyl)phenol, Triethylendiamin (Diazabicyclo[2,2,2]octan), Dimethylaminoethanolamin, Dimethylaminopropylamin, N,N-Dimethylaminoethoxyethanol, N,N,N-Trimethylaminoethylethanolamin, Triethanolamin, Diethanolamin, Triisopropanolamin, Diisopropanolamin, Metall-Acetylacetonate, Ammonium-Ethylhexanoate und Metallionen-Ethylhexanoate.

Die Verwendung der im Rahmen der vorliegenden Erfindung bevorzugten Katalysatoren (a5) führt zu porösen Materialien mit verbesserten mechanischen Eigenschaften, insbesonders zu verbesserter Druckfestigkeit. Darüber hinaus wird durch Verwendung der Katalysatoren (a5) die Gelierungszeit verringert, d. h. die Gelierungsreaktion beschleunigt, ohne andere Eigenschaften negativ zu beeinflussen.

### Lösungsmittel

Gemäß der vorliegenden Erfindung findet die Umsetzung in Gegenwart eines Lösungsmittels statt.

Der Begriff Lösungsmittel umfasst im Rahmen der vorliegenden Erfindung flüssige Verdünnungsmittel, das heißt sowohl Lösungsmittel im engeren Sinne als auch Dispersionsmittel. Die Mischung kann insbesondere eine echte Lösung, eine kolloidale Lösung oder eine Dispersion, z.B. eine Emulsion oder Suspension, sein. Bevorzugt ist die Mischung eine echte Lösung. Das Lösungsmittel ist eine unter den Bedingungen des Schrittes (a) flüssige Verbindung, vorzugsweise ein organisches Lösungsmittel.

Als Lösungsmittel kommen prinzipiell eine organische Verbindung oder ein Gemisch aus mehreren Verbindungen in Betracht, wobei das Lösungsmittel bei den Temperatur- und Druckbedingungen, unter denen die Mischung in Schritt (a) bereitgestellt wird (kurz: Lösungsbedingungen), flüssig ist. Die Zusammensetzung des Lösungsmittels wird so gewählt, dass es in der Lage ist, die organische Gelvorstufe zu lösen oder zu dispergieren, bevorzugt zu lösen. Bevorzugte Lösungsmittel sind solche, die ein Lösungsmittel für die organische Gelvorstufe (A) sind, d. h. solche, die die organische Gelvorstufe (A) unter Reaktionsbedingungen vollständig lösen.

Das Reaktionsprodukt der Umsetzung in Gegenwart des Lösungsmittels ist zunächst ein Gel, d. h. ein viskoelastisches chemisches Netzwerk, das durch das Lösungsmittel gequollen ist. Ein Lösungsmittel, welches ein gutes Quellmittel für das in Schritt (a) gebildete Netzwerk darstellt, führt in der Regel zu einem Netzwerk mit feinen Poren und kleinem mittleren Porendurchmesser, wohingegen ein Lösungsmittel, welches ein schlechtes Quellmittel für das aus Schritt (a) resultierende Gel darstellt, in der Regel zu einem grobporigen Netzwerk mit großem mittleren Porendurchmesser führt.

Die Wahl des Lösungsmittels beeinflusst somit die angestrebte Porengrößenverteilung und die angestrebte Porosität. Die Wahl des Lösungsmittels erfolgt im Allgemeinen zudem so, dass ein Ausfällen oder Ausflocken durch Bildung eines präzipitierten Reaktionsproduktes während oder nach Schritt (a) des erfindungsgemäßen Verfahrens weitestgehend nicht auftritt.

Bei Wahl eines geeigneten Lösungsmittels ist der Anteil an präzipitiertem Reaktionsprodukt üblicherweise kleiner als 1 Gew.-%, bezogen auf das Gesamtgewicht der Mischung. Die Menge an gebildetem präzipitiertem Produkt in einem bestimmten Lösungsmittel kann gravimetrisch bestimmt werden, indem die Reaktionsmischung vor dem Gelpunkt über ein geeignetes Filter filtriert wird.

Als Lösungsmittel kommen die aus dem Stand der Technik bekannten Lösungsmittel für Isocyanat-basierte Polymere in Frage. Bevorzugte Lösungsmittel sind dabei solche, die ein Lösungsmittel für die Komponenten (a1) bis (a5) sind, d. h. solche, die die Bestandteile der Komponenten (a1) bis (a5) unter Reaktionsbedingungen weitgehend vollständig lösen. Bevorzugt ist das Lösungsmittel gegenüber Komponente (a1) inert, d. h. nicht reaktiv.

Als Lösungsmittel kommen beispielsweise Ketone, Aldehyde, Alkylalkanoate, Amide wie Formamid und N-Methylpyrollidon, Sulfoxide wie Dimethylsulfoxid, aliphatische und cycloaliphatische halogenierte Kohlenwasserstoffe, halogenierte aromatische Verbindungen und fluorhaltige Ether in Betracht. Ebenso in Betracht kommen Mischungen aus zwei oder mehreren der vorgenannten Verbindungen.

Weiterhin kommen Acetale, insbesondere Diethoxymethan, Dimethoxymethan und 1,3-Dioxolan, als Lösungsmittel in Betracht.

Dialkylether und zyklische Ether sind als Lösungsmittel ebenfalls geeignet. Bevorzugte Dialkylether sind insbesondere solche mit 2 bis 6 Kohlenstoffatomen, insbesondere Methyl-Ethylether, Diethylether, Methyl-Propylether, Methyl-Isopropylether, Propyl-Ethylether, Ethyl-Isopropylether, Dipropylether, Propyl-Isopropylether, Diisopropylether, Methyl-Butylether, Methyl-Isobutylether, Methyl-t-Butylether, Ethyl-n-Butylether, Ethyl-Isobutylether und Ethyl-t-Butylether. Bevorzugte zyklische Ether sind insbesondere Tetrahydrofuran, Dioxan und Tetrahydropyran.

Als Lösungsmittel sind außerdem Alkylalkanoate bevorzugt, insbesondere Methylformiat, Methylacetat, Ethylformiat, Butylacetat und Ethylacetat. Bevorzugte halogenierte Lösungsmittel sind in der WO 00/24799, Seite 4, Zeile 12 bis Seite 5, Zeile 4 beschrieben.

Aldehyde und/oder Ketone sind als Lösungsmittel bevorzugt. Als Lösungsmittel geeignete Aldehyde oder Ketone sind insbesondere solche entsprechend der allgemeinen Formel R²-(CO)-R¹, wobei R¹ und R² Wasserstoff oder Alkylgruppen mit 1,2,3 oder 4 Kohlenstoffatomen sind. Geeignete Aldehyde oder Ketone sind insbesondere Acetaldehyd, Propionaldehyd, n-Butyraldehyd, Isobutyraldehyd, 2-Ethylbutyraldehyd, Valeraldehyd, Isopentaldehyd, 2-Methylpentaldehyd, 2-Ethylhexaldehyde, Acrolein, Methacrolein, Crotonaldehyd, Furfural, Acroleindimer, Methacroleindimer, 1,2,3,6-Tetrahydrobenzaldehyd, 6-Methyl-3-cyclohexenaldehyd, Cyanacetaldehyd, Glyoxynsäureethylester, Benzaldehyd, Aceton, Diethylketon, Methylethylketon, Methylisobutylketon, Methyl-n-butylketon, Ethylisopropylketon, 2-Acetylfuran, 2-Methoxy-4-methylpentan-2-on, Cyclohexanon und Acetophenon. Die vorgenannten Aldehyde und Ketone können auch in Form von Mischungen eingesetzt werden. Ketone und Aldehyde mit Alkylgruppen mit bis zu 3 Kohlenstoffatomen pro Substituent sind als Lösungsmittel besonders bevorzugt. Ganz besonders bevorzugt sind Ketone der allgemeinen Formel R¹(CO)R², wobei R¹ und R² unabhängig voneinander ausgewählt werden aus Alkylgruppen mit 1 bis 3 C-Atomen. In einer ersten bevorzugten Ausführungsform ist das Keton Aceton. In einer weiteren bevorzugten Ausführungsform umfasst mindestens einer der beiden Substituenten R¹ und/oder R² eine Alkylgruppe mit mindestens 2 Kohlenstoffatomen, insbesondere Methylethylketon. Durch Verwendung der vorgenannten besonders bevorzugten Ketone in Kombination mit dem erfindungsgemäßen Verfahren werden poröse Materialien mit besonders kleinem mittlerem Porendurchmesser erhalten. Ohne sich beschränken zu wollen besteht die Vorstellung, dass die Porenstruktur des entstehenden Gels aufgrund der höheren Affinität der vorgenannten besonders bevorzugten Ketone besonders feinporig ist.

In vielen Fällen ergeben sich besonders geeignete Lösungsmittel, indem man zwei oder mehrere miteinander vollständig mischbare Verbindungen, ausgewählt aus den vorgenannten Lösungsmitteln, in Form eines Gemisches einsetzt.

Um in Schritt (a) ein ausreichend stabiles Gel zu erhalten, das bei der Trocknung in Schritt (b) nicht stark schrumpft, darf der Anteil der Komponenten (a1)bis (a4) am Gesamtgewicht der Komponenten (a1) bis (a4) und dem Lösungsmittel, welches 100 Gew.-% ergibt, im Allgemeinen nicht weniger als 5 Gew.-% betragen. Bevorzugt beträgt der Anteil der Komponenten (a1) bis (a4) am Gesamtgewicht der Komponenten (a1) bis (a4) und dem Lösungsmittel, welches 100 Gew.-% ergibt, mindestens 6 Gew.-%, besonders bevorzugt mindestens 8 Gew.-%, insbesondere mindestens 10 Gew.-%.

Andererseits darf die Konzentration der Komponenten (a1) bis (a4) in der bereitgestellten Mischung nicht zu hoch gewählt werden, da ansonsten kein poröses Material mit günstigen Eigenschaften erhalten wird. Im Allgemeinen beträgt der Anteil der Komponenten (a1) bis (a4) am Gesamtgewicht der Komponenten (a1) bis (a4) und dem Lösungsmittel, welches 100 Gew.-% ergibt, höchstens 40 Gew.-%. Bevorzugt beträgt der Anteil der Komponenten (a1) bis (a4) am Gesamtgewicht der Komponenten (a1) bis (a4) und dem Lösungsmittel, welches 100 Gew.-% ergibt, höchstens 35 Gew.-%, besonders bevorzugt höchstens 25 Gew.-%, insbesondere höchstens 20 Gew.-%.

Vorzugsweise beträgt der Gewichtsanteil der Komponenten (a1) bis (a4) am Gesamtgewicht der Komponenten (a1)bis (a4) und des Lösungsmittels, welches 100 Gew.-% ergibt, insgesamt von 8 bis 25 Gew.-%, insbesondere von 10 bis 20 Gew.-%, besonders bevorzugt von 12 bis 18 Gew.-%. Die Einhaltung der Menge der Einsatzstoffe im genannten Bereich führt zu porösen Materialien mit besonders günstiger Porenstruktur, geringer Wärmeleitfähigkeit und geringer Schrumpfung bei der Trocknung.
Vor der Umsetzung gemäß Schritt (a) des erfindungsgemäßen Verfahren erfolgt vorzugsweise das Bereitstellen der Komponenten (a1), (a2), gegebenenfalls (a3), gegebenenfalls (a5) sowie (a3) und des Lösungsmittels.

Vorzugsweise werden die Komponenten (a1) einerseits und (a2) und (a4) sowie gegebenenfalls (a3) und gegebenenfalls (a5) andererseits getrennt voneinander jeweils in einer geeigneten Teilmenge des Lösungsmittels bereitgestellt. Die getrennte Bereitstellung ermöglicht die optimale Kontrolle beziehungsweise Steuerung der Gelierungsreaktion vor und während des Vermischens.

Sofern Wasser als Komponente (a3) verwendet wird, wird Komponente (a3) besonders bevorzugt getrennt von Komponente (a1) bereitgestellt. Dies vermeidet die Reaktion von Wasser mit Komponente (a1) unter Bildung von Netzwerken ohne Anwesenheit der Komponente (a2). Andernfalls führt die Vorabmischung von Wasser mit Komponente (a1) zu weniger günstigen Eigenschaften in Bezug auf die Homogenität der Porenstruktur und die Wärmeleitfähigkeit der resultieren Materialien.

Die vor Durchführung von Schritt (a) bereitgestellte Mischung oder Mischungen können außerdem übliche, dem Fachmann bekannte Hilfsmittel als weitere Bestandteile enthalten. Genannt seien beispielsweise oberflächenaktive Substanzen, Keimbildungsmittel, Oxidationsstabilisatoren, Gleit- und Entformungshilfen, Farbstoffe und Pigmente, Stabilisatoren, z.B. gegen Hydrolyse, Licht, Hitze oder Verfärbung, anorganische und/oder organische Füllstoffe, Verstärkungsmittel und Biozide.

Nähere Angaben über die oben genannten Hilfsmittel- und Zusatzstoffe sind der Fachliteratur zu entnehmen, z.B. aus Plastics Additive Handbook, 5th edition, H. Zweifel, ed. Hanser Publishers, München, 2001, Seiten 104-127.

Um die Umsetzung gemäß Schritt (a) des erfindungsgemäßen Verfahrens durchzuführen, muss zunächst eine homogene Mischung der vor der Umsetzung gemäß Schritt (a) bereitgestellten Komponenten erzeugt werden.

Das Bereitstellen der im Rahmen von Schritt (a) umgesetzten Komponenten kann auf übliche Weise erfolgen. Bevorzugt wird dazu ein Rührer oder eine andere Mischvorrichtung eingesetzt, um eine gute und schnelle Durchmischung zu erzielen. Die zur Erzeugung der homogenen Mischung benötigte Zeitdauer sollte klein im Verhältnis zur der Zeitdauer sein, in der die Gelierungsreaktion zu der zumindest teilweisen Ausbildung eines Gels führt, um Mischfehler zu vermeiden. Die sonstigen Mischbedingungen sind in der Regel nicht kritisch, beispielsweise kann man bei 0 bis 100°C und 0,1 bis 10 bar (absolut), insbesondere z.B. bei Raumtemperatur und Atmosphärendruck, mischen. Nach erfolgter Erzeugung einer homogenen Mischung wird die Mischapparatur vorzugsweise abgeschaltet.
Bei der Gelierungsreaktion handelt es sich um eine Polyadditionsreaktion, insbesondere um eine Polyaddition von Isocyanatgruppen und Aminogruppen.

Unter einem Gel soll ein vernetztes System auf Basis eines Polymers verstanden werden, das in Kontakt mit einer Flüssigkeit (sog. Solvogel oder Lyogel, bzw. mit Wasser als Flüssigkeit: Aquagel oder Hydrogel) vorliegt. Dabei bildet die Polymerphase ein kontinuierliches räumliches Netzwerk.

Im Rahmen von Schritt (a) des erfindungsgemäßen Verfahrens entsteht das Gel üblicherweise durch Ruhenlassen, z.B. durch einfaches Stehenlassen des Behälters, Reaktionsgefäßes oder Reaktors, in dem sich die Mischung befindet (im folgenden Geliervorrichtung genannt). Bevorzugt wird während des Gelierens (Gelbildung) die Mischung nicht mehr gerührt oder durchmischt, weil dies die Ausbildung des Gels behindern könnte. Es hat sich als vorteilhaft erwiesen, die Mischung während des Gelierens abzudecken bzw. die Geliervorrichtung zu verschließen.

Die Gelierung ist dem Fachmann an sich bekannt und wird beispielsweise in der WO-2009/027310 auf Seite 21, Zeile 19 bis Seite 23, Zeile 13 beschrieben.

### Schritt (b)

Erfindungsgemäß wird in Schritt (b) das im vorigen Schritt erhaltene Gel getrocknet, indem das organische Lösungsmittel unter Erhalt des organischen porösen Materials entfernt wird.

Grundsätzlich kommt eine Trocknung unter überkritischen Bedingungen in Betracht, vorzugsweise nach Austausch des Lösungsmittels durch CO₂ oder andere für Zwecke der überkritischen Trocknung geeignete Lösungsmittel. Eine derartige Trocknung ist dem Fachmann an sich bekannt. Überkritische Bedingungen kennzeichnen eine Temperatur und einen Druck, bei der die zu entfernende fluide Phase im überkritischen Zustand vorliegt. Hierdurch lässt sich die Schrumpfung des Gelkörpers beim Entfernen des Lösungsmittels reduzieren. Das aus der überkritischen Trocknung erhaltene Material wird als Aerogel bezeichnet.

Es ist allerdings angesichts der einfachen Verfahrensführung bevorzugt, die erhaltenen Gele durch Überführung der im Gel enthaltenen Flüssigkeit in den gasförmigen Zustand bei einer Temperatur und einem Druck unterhalb der kritischen Temperatur und des kritischen Drucks der im Gel enthaltenen Flüssigkeit zu trocknen. Das aus der subkritischen Trocknung erhaltene Material wird als Xerogel bezeichnet. Vorzugsweise erfolgt das Trocknen des erhaltenen Gels durch Überführung des Lösungsmittels in den gasförmigen Zustand bei einer Temperatur und einem Druck unterhalb der kritischen Temperatur und des kritischen Drucks des Lösungsmittels. Demzufolge erfolgt vorzugsweise das Trocknen durch Entfernung des Lösungsmittels, das bei der Umsetzung zugegen war, ohne vorherigen Austausch gegen ein weiteres Lösungsmittel.

Entsprechende Methoden sind dem Fachmann ebenfalls bekannt und werden in der WO-2009/027310 auf Seite 26, Zeile 22 bis Seite 28, Zeile 36 beschrieben.

Bei der subkritischen Trocknung ist die Schrumpfung des Gelkörpers besonders ausgeprägt. Es ist ein Vorteil der vorliegenden Erfindung, die Schrumpfung bei der Trocknung zu minimieren.

### Eigenschaften der porösen Materialien und Verwendung

Ein weiterer Gegenstand der vorliegenden Erfindung sind die gemäß dem erfindungsgemäßen Verfahren erhältlichen porösen Materialien.

Xerogele sind als poröse Materialien im Rahmen der vorliegenden Erfindung bevorzugt, d. h. vorzugsweise ist das erfindungsgemäß erhältliche poröse Material ein Xerogel.

Unter einem Xerogel wird im Rahmen der vorliegenden Erfindung insbesondere ein poröses Material mit einer Porosität von mindestens 70 Vol.-% und einem volumengemittelten mittleren Porendurchmesser von höchstens 50 Mikrometer verstanden, welches durch ein Sol-Gel-Verfahren hergestellt wurde, wobei die flüssige Phase durch Trocknen unterhalb der kritischen Temperatur und unterhalb des kritischen Drucks der flüssigen Phase ("subkritische Bedingungen") aus dem Gel entfernt wurde.

Die Bestimmung der mittleren Porengröße erfolgt im Rahmen der vorliegenden Erfindung bevorzugt mittels Quecksilber-Porosimetrie nach DIN 66133 (1993) bei Raumtemperatur. Die mittlere Porengröße ist im Rahmen dieser Erfindung gleichzusetzen mit dem mittleren Porendurchmesser. Die Bestimmung des volumengewichteten mittleren Porendurchmessers erfolgt dabei rechnerisch aus der nach oben genannter Norm bestimmten Porengrößenverteilung.

Vorzugsweise beträgt der volumengewichtete mittlere Porendurchmesser des porösen Materials höchstens 8 Mikrometer. Besonders bevorzugt beträgt der volumengewichtete mittlere Porendurchmesser des porösen Materials höchstens 5 Mikrometer, ganz besonderes bevorzugt höchstens 3 Mikrometer und insbesondere höchstens 1 Mikrometer.

Zwar ist eine möglichst geringe Porengröße bei hoher Porosität aus Sicht einer geringen thermischen Leitfähigkeit wünschenswert. Herstellungsbedingt und um ein mechanisch ausreichend stabiles poröses Material zu erhalten, ergibt sich jedoch eine praktische untere Grenze des volumengewichteten mittleren Porendurchmessers. Im Allgemeinen beträgt der volumengewichtete mittlere Porendurchmesser mindestens 50 nm, vorzugsweise mindestens 100 nm. In vielen Fällen beträgt der volumengewichtete mittlere Porendurchmesser mindestens 200 nm, insbesondere mindestens 300 nm.

Bevorzugt weist das erfindungsgemäß erhältliche poröse Material eine Porosität von mindestens 70 Vol.-%, insbesondere von 70 bis 99 Vol.-%, besonders bevorzugt mindestens 80 Vol.-% auf, ganz besonders bevorzugt mindestens 85 Vol.-%, insbesondere von 85 bis 95 Vol.-%. Die Porosität in Vol.-% bedeutet, dass der genannte Anteil des Gesamtvolumens des porösen Materials aus Poren besteht. Zwar ist aus Sicht einer minimalen Wärmeleitfähigkeit meist eine möglichst hohe Porosität erwünscht, doch ist die Porosität durch die mechanischen Eigenschaften und die Verarbeitbarkeit des porösen Materials nach oben begrenzt.

Die Komponenten (a1), gegebenenfalls teilweise zunächst mit Wasser umgesetzt, und (a2) liegen im erfindungsgemäß erhältlichen porösen Material in umgesetzter (polymerer) Form vor. Aufgrund der erfindungsgemäßen Zusammensetzung liegen die Monomerbausteine (a1) und (a2) im porösen Material überwiegend über Harnstoffverknüpfungen und/oder über Isocyanuratverknüpfungen gebunden vor, wobei die Isocyanuratgruppen durch Trimerisierung von Isocyanatgruppen der Monomerbausteine (a1) entstehen. Sofern das poröse Material weitere Komponenten enthält, sind weitere mögliche Verknüpfungen beispielsweise Urethangruppen, welche durch Reaktion von Isocyanatgruppen mit Alkoholen oder Phenolen entstehen.

Bevorzugt liegen die Komponenten (a1), gegebenenfalls teilweise zunächst mit Wasser umgesetzt, und (a2) im porösen Material zu mindestens 50 mol-% durch Harnstoffgruppen -NH-CO-NH- und/oder über Isocyanuratverknüpfungen verknüpft vor. Vorzugsweise liegen die Komponenten (a1) und (a2) im porösen Material von 50 bis 100 mol-% durch Harnstoffgruppen und/oder über Isocyanuratverknüpfungen verknüpft vor, insbesondere von 60 bis 100 mol-%, ganz besonders bevorzugt von 70 bis 100 mol-%, insbesondere 80 bis 100 mol-%, beispielsweise von 90 bis 100 mol-%.

Die zu 100 mol-% fehlenden mol-% liegen als weitere Verknüpfungen vor, wobei solche weitere Verknüpfungen dem Fachmann aus dem Gebiet der Isocyanat-Polymere an sich bekannt sind. Beispielhaft genannt seien Ester-, Harnstoff-, Biuret-, Allophanat-, Carbodiimid-, Uretdion- und/oder Urethangruppen.

Die Bestimmung der mol-% der Verknüpfungen der Monomerbausteine im porösen Material erfolgt mittels NMR-Spektroskopie (Kernspinresonanz) im Festkörper oder in gequollenem Zustand. Geeignete Bestimmungsmethoden sind dem Fachmann bekannt.

Die Dichte des erfindungsgemäß erhältlichen porösen Materials beträgt üblicherweise 20 bis 600 g/l, bevorzugt 50 bis 500 g/l und besonders bevorzugt 70 bis 200 g/l.

Das erfindungsgemäße Verfahren ergibt ein zusammenhängendes poröses Material und nicht nur ein Polymerpulver oder -partikel. Dabei wird die räumliche Form des resultierenden porösen Materials durch die Form des Gels bestimmt, die wiederum durch die Form der Geliervorrichtung bestimmt wird. So ergibt beispielsweise ein zylindrischer Gelierbehälter üblicherweise ein annähernd zylinderförmiges Gel, das dann zu einem porösen Material in Zylinderform getrocknet werden kann.

Die erfindungsgemäßen erhältlichen porösen Materialien weisen eine geringe Wärmeleitfähigkeit, eine hohe Porosität und eine geringe Dichte bei gleichzeitig hoher mechanischer Stabilität sowie guten Flammschutzeigenschaften auf. Die porösen Materialien weisen zudem eine geringe mittlere Porengröße auf. Die Kombination der vorgenannten Eigenschaften erlaubt den Einsatz als Dämmstoff im Bereich der thermischen Isolation, insbesondere für Anwendungen im Vakuumbereich, wo eine möglichst geringe Dicke von Vakuumplatten bevorzugt ist, beispielsweise in Kühlgeraten oder in Gebäuden. So ist die Verwendung in Vakuumisolationspaneelen, insbesondere als Kernmaterial für Vakuumisolationspaneelen, bevorzugt. Bevorzugt ist außerdem die Verwendung der erfindungsgemäßen porösen Materialien zur Wärmedämmung, insbesondere in Bauanwendungen. Die durch die vorliegende Erfindung erhältlichen Materialien zeichnen sich durch günstige Wärmeleitfähigkeiten einerseits und durch günstige Flammschutzeigenschaften andererseits aus. Durch die günstigen Wärmedämmeigenschaften bei Normaldruck und die gleichzeitig guten Flammschutzeigenschaften sind die erfindungsgemäßen Materialien insbesondere für Bauanwendungen geeignet.

### Beispiele

Die Bestimmung des Porenvolumens in ml pro g Probe und der mittleren Porengröße der Materialien erfolgte mittels Quecksilber-Porosimetrie nach DIN 66133 (1993) bei Raumtemperatur. Die mittlere Porengröße ist im Rahmen dieser Erfindung gleichzusetzen mit dem mittleren Porendurchmesser. Die Bestimmung des volumengewichteten mittleren Porendurchmessers erfolgt dabei rechnerisch aus der nach oben genannter Norm bestimmten Porengrößenverteilung.

Die Porosität in der Einheit Vol.-% wurde gemäß der Formel P = (Vᵢ / (Vᵢ + Vₛ)) * 100 Vol.-% berechnet, wobei P die Porosität, Vᵢ das Hg-Intrusionsvolumen nach DIN 66133 in ml/g und Vₛ das spezifische Volumen in ml/g des Probenkörpers ist.

Die Dichte ρ des porösen Gels in der Einheit g/ml wurde gemäß der Formel ρ = m / (π*r²)*h berechnet, wobei m die Masse des porösen Gels, r der Radius (halber Durchmesser) des porösen Gels und h die Höhe porösen Gels ist.

Die Schrumpfung während Schritt (b) des erfindungsgemäßen Verfahrens wurde bestimmt, indem die Höhe eines zylinderförmigen Gels und der Durchmesser cm vor und nach der Entfernung des Lösungsmittels verglichen wurden. Die angegebenen Werte beziehen sich auf das relative Volumen des geschrumpften Zylinders im Vergleich zum Gelkörper vor der Entfernung des Lösungsmittels, d. h. die Schrumpfung wird als Volumenverlust in % angegeben. Die Zylinder wiesen vor Schrumpfung eine Höhe von 4,9 cm und einen Durchmesser von 2,7 cm auf.

Die Bestimmung der Flammschutzeigenschaften erfolgte nach dem BKZ-Test wie oben beschrieben. Sofern die im Rahmen des Brennbarkeitsgrades 5 angegebene maximale Flammenhöhe von 15 cm nicht erreicht wurde, wurde anstatt dessen die im Rahmen des BKZ-Testes beobachtete Flammenhöhe angegeben.

Es wurden folgende Verbindungen eingesetzt:
Komponente a1:
   Oligomeres MDI (Lupranat® M50) mit einem NCO-Gehalt von 31,5 g pro 100 g nach ASTM D-5155-96 A, einer Funktionalität im Bereich von 2,8 bis 2,9 und einer Viskosität von 550 mPa.s bei 25°C nach DIN 53018 (nachfolgend "Verbindung M50").
Komponente a2:
   Oligomeres Diaminodiphenylmethan mit einer Viskosität von 2710 mPa.s bei 50°C nach DIN 53018, einer Funktionalität im Bereich von 2,4 und einem Gehalt an Aminogruppen von 9,93 mmol/g (nachfolgend "PMDA").
Komponente a3:

### Exolit® OP560

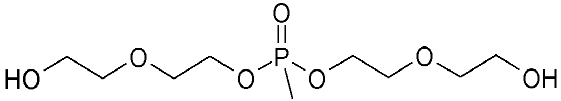

### PHT-4-Diol™ von Chemtura:

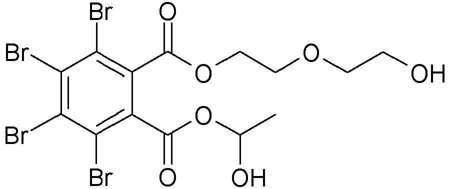

### Antiblaze® V490 von Albemarle:

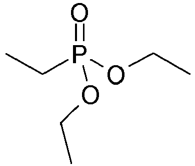

### Beispiel 1

2,0 g der Verbindung M50 wurden unter Rühren bei 20°C in 10,5 g Aceton in einem Becherglas gelöst. 1,3 g PMDA und 0,5g Exolit® OP560 wurden in 11 g Aceton in einem zweiten Becherglas gelöst. Die beiden Lösungen aus Schritt (a) wurden gemischt. Man erhielt eine klare, niedrigviskose Mischung. Die Mischung wurde bei Raumtemperatur 24 Stunden zur Aushärtung stehen gelassen. Anschließend wurde das Gel aus dem Becherglas genommen und die Flüssigkeit (Aceton) durch 7 Tage langes Trocknen bei 20°C entfernt.

Das erhaltene Material hatte einen durchschnittlichen Porendurchmesser von 4,0 µm. Die Porosität betrug 86 Vol.-% mit einer entsprechenden Dichte von 233 g/l. Die Schrumpfung betrug 42%. Im BKZ-Test wurde eine Flammenhöhe von 5cm gemessen.

### Beispiel 2

2,0 g der Verbindung M50 wurden unter Rühren bei 20°C in 10,5 g Aceton in einem Becherglas gelöst. 1,3 g PMDA und 0,5g PHT-4-Diol™ wurden in 11 g Aceton in einem zweiten Becherglas gelöst. Die beiden Lösungen aus Schritt (a) wurden gemischt. Man erhielt eine klare, niedrigviskose Mischung. Die Mischung wurde bei Raumtemperatur 24 Stunden zur Aushärtung stehen gelassen. Anschließend wurde das Gel aus dem Becherglas genommen und die Flüssigkeit (Aceton) durch 7 Tage langes Trocknen bei 20°C entfernt.

Das erhaltene Material hatte einen durchschnittlichen Porendurchmesser von 5,0 µm. Die Porosität betrug 85 Vol.-% mit einer entsprechenden Dichte von 235 g/l. Die Schrumpfung betrug 43%. Im BKZ-Test wurde eine Flammhöhe von 9 cm.

### Beispiel 3

2,0 g der Verbindung M50 wurden unter Rühren bei 20°C in 10,5 g Aceton in einem Becherglas gelöst. 1,3 g PMDA und 0,5g Antiblaze® V490 von Albemarle wurden in 11 g Aceton in einem zweiten Becherglas gelöst. Die beiden Lösungen aus Schritt (a) wurden gemischt. Man erhielt eine klare, niedrigviskose Mischung. Die Mischung wurde bei Raumtemperatur 24 Stunden zur Aushärtung stehen gelassen. Anschließend wurde das Gel aus dem Becherglas genommen und die Flüssigkeit (Aceton) durch 7 Tage langes Trocknen bei 20°C entfernt.

Das erhaltene Material hatte einen durchschnittlichen Porendurchmesser von 3,0 µm. Die Porosität betrug 86 Vol.-% mit einer entsprechenden Dichte von 226 g/l. Die Schrumpfung betrug 42%. Im BKZ-Test wurde eine Flammenhöhe von 5cm gemessen.

### Beispiel 4V

2,4 g der Verbindung M50 wurden unter Rühren bei 20°C in 10,5 g Aceton in einem Becherglas gelöst. 1,3 g der Verbindung PMDA wurden in 11 g Aceton in einem zweiten Becherglas gelöst. Die beiden Lösungen aus Schritt (a) wurden gemischt. Man erhielt eine klare, niedrigviskose Mischung. Die Mischung wurde bei Raumtemperatur 24 Stunden zur Aushärtung stehen gelassen. Anschließend wurde das Gel aus dem Becherglas genommen und die Flüssigkeit (Aceton) durch 7 Tage langes Trocknen bei 20°C entfernt.

Das erhaltene Material wies im Vergleich zu Beispiel 1 eine deutlich geschrumpfte Form auf. Die Schrumpfung betrug 70%. Die Porosität betrug 71 Vol.-% mit einer entsprechenden Dichte von 390 g/l. Im BKZ-Test wurde eine Flammenhöhe von 7cm gemessen, wobei zu beachten ist, dass die hohe Dichte des Materials die Brennbarkeit reduziert.

## Patentansprüche

1. Verfahren zur Herstellung von porösen Materialien umfassend folgende Schritte:
(a) Umsetzung von mindestens einem mehrfunktionellen Isocyanat (a1) und mindestens einem mehrfunktionellen aromatischen Amin (a2) in einem organischen Lösungsmittel optional in Gegenwart von Wasser als Komponente (a3) und optional in Gegenwart mindestens eines Katalysators (a5); und anschließend
(b) Entfernung des organischen Lösungsmittels unter Erhalt des organischen porösen Materials,
wobei Schritt (a) in Gegenwart mindestens eines organischen Flammschutzmittels als Komponente (a4) durchgeführt wird, welches in dem Lösungsmittel löslich ist, wobei
das mindestens eine mehrfunktionelle aromatische Amin (a2) ausgewählt ist aus der Gruppe bestehend aus Isomeren und Derivaten von Diaminodiphenylmethan.

2. Verfahren nach Anspruch 1, wobei die Flammschutzmittel der Komponente (a3) Verbindungen enthaltend Phosphor und/oder Halogen, insbesondere Brom, sind.

3. Verfahren nach Anspruch 1 oder 2, wobei Komponente (a4) in Mengen von 0,1 bis 25 Gew.-%, bevorzugt von 1 bis 15 Gew.-%, jeweils bezogen auf die Gewichtsmenge aus Komponenten (a1) bis (a4) eingesetzt wird, welche 100 Gew.-% ergibt.

4. Verfahren nach einem oder mehreren der Ansprüche 1 bis 3, wobei Komponente (a4) mindestens ein Flammschutzmittel enthält, das ausgewählt wird aus der Gruppe bestehend aus polybromierten Verbindungen und organischen Phosphorverbindungen.

5. Verfahren nach einem oder mehreren der Ansprüche 1 bis 4, wobei Komponente (a4) mindestens ein Organophosphorsäurederivat umfasst.

6. Verfahren nach einem oder mehreren der Ansprüche 1 bis 5, wobei Komponente (a4) mindestens ein Organophosphonsäurederivat umfasst.

7. Verfahren nach einem oder mehreren der Ansprüche 1 bis 6, wobei Komponente (a4) mindestens ein Organophosphinsäurederivat umfasst

8. Verfahren nach einem oder mehreren der Ansprüche 1 bis 7, wobei Komponente (a4) mindestens eine Verbindung umfasst, welche eine gegenüber Isocyanaten reaktive funktionelle Gruppe enthält, insbesondere mindestens 2 solcher reaktiver funktioneller Gruppen.

9. Verfahren nach einem oder mehreren der Ansprüche 1 bis 8, wobei das mindestens eine mehrfunktionelle Isocyanat (a1) aus mindestens einem mehrfunktionellen Isocyanat ausgewählt aus Diphenylmethan-4,4'-diisocyanat, Diphenylmethan-2,4'-diisocyanat, Diphenylmethan-2,2'-diiso-cyanat und oligomerem Diphenylmethandiisocyanat aufgebaut ist.

10. Verfahren nach einem oder mehreren der Ansprüche 1 bis 9, wobei Komponente (a1) oligomeres Diphenylmethandiisocyanat enthält und eine Funktionalität von mindestens 2,4 aufweist.

11. Verfahren nach einem oder mehreren der Ansprüche 1 bis 10, wobei die Komponente (a2) oligomeres Diaminodiphenylmethan enthält und eine Funktionalität von mindestens 2,4 aufweist.

12. Verfahren nach einem oder mehreren der Ansprüche 1 bis 11, wobei das mindestens eine mehrfunktionelle aromatische Amin mindestens ein mehrfunktionel-
les aromatisches Amin gemäß der allgemeinen Formel I umfasst, 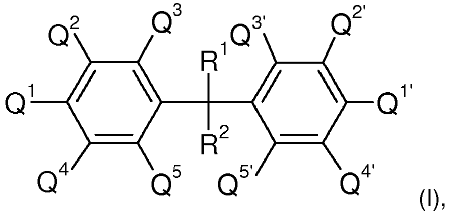 wobei R¹ und R² gleich oder unterschiedlich sein können und unabhängig voneinander ausgewählt werden aus Wasserstoff und linearen oder verzweigten Alkylgruppen mit von 1 bis 6 Kohlenstoffatomen und wobei sämtliche Substituenten Q¹ bis Q⁵ und Q¹' bis Q⁵' gleich oder unterschiedlich sind und unabhängig voneinander ausgewählt werden aus Wasserstoff, einer primären Aminogruppe und einer linearen oder verzweigten Alkylgruppe mit von 1 bis 12 Kohlenstoffatomen, wobei die Alkylgruppe weitere funktionelle Gruppen tragen kann, unter der Voraussetzung, dass die Verbindung gemäß der allgemeinen Formel I mindestens zwei primäre Aminogruppen umfasst, wobei zumindest eines aus Q¹, Q³ und Q⁵ eine primäre Aminogruppe ist und zumindest eines aus Q¹', Q³' und Q⁵' eine primäre Aminogruppe ist.

13. Verfahren nach Anspruch 12, wobei Q², Q⁴, Q²' und Q⁴' so gewählt werden, dass die Verbindung gemäß der allgemeinen Formel I mindestens eine lineare oder verzweigte Alkylgruppe, die weitere funktionelle Gruppen tragen kann, mit von 1 bis 12 Kohlenstoffatomen in α-Position zu mindestens einer an den aromatischen Kern gebundenen primären Aminogruppe aufweist.

14. Verfahren nach einem oder mehreren der Ansprüche 1 bis 13, wobei Komponente (a2) mindestens eine der folgenden Verbindungen enthält: 4,4'-Diaminodiphenylmethan, 2,4'-Diaminodiphenylmethan, 2,2'-Diaminodiphenylmethan und oligomeres Diaminodiphenylmethan.

15. Verfahren nach einem oder mehreren der Ansprüche 1 bis 14, wobei die Umsetzung in Gegenwart eines Katalysators (a5) durchgeführt wird.

16. Verfahren nach einem oder mehreren der Ansprüche 1 bis 15, wobei die Entfernung des Lösungsmittels durch Überführung des Lösungsmittels in den gasförmigen Zustand bei einer Temperatur und einem Druck unterhalb der kritischen Temperatur und des kritischen Drucks des Lösungsmittels erfolgt.

17. Poröses Material erhältlich gemäß den Ansprüchen 1 bis 16.

18. Poröses Material nach Anspruch 17, wobei der volumengewichtete mittlere Porendurchmesser des Xerogels höchstens 5 Mikrometer beträgt.

19. Verwendung des porösen Materials gemäß den Ansprüchen 17 oder 18 zur Wärmedämmung.

20. Verwendung des porösen Materials gemäß den Ansprüchen 17 oder 18 zur Wärmedämmung in Bauanwendungen.

## Claims

1. A process for producing porous materials comprising the following steps:
(a) reacting at least one polyfunctional isocyanate (a1) and at least one polyfunctional aromatic amine (a2) in an organic solvent optionally in the presence of water as component (a3) and optionally in the presence of at least one catalyst (a5); and then
(b) removing the organic solvent to obtain the organic porous material,
where step (a) is carried out in the presence of at least one organic flame retardant as component (a4), this flame retardant being soluble in the solvent, where
the at least one polyfunctional aromatic amine (a2) is selected from the group consisting of isomers and derivatives of diaminodiphenylmethane.

2. The process according to claim 1, where the flame retardants of component (a3) are compounds comprising phosphorus and/or halogen, in particular bromine.

3. The process according to claim 1 or 2, where the amounts used of component (a4) are from 0.1% to 25% by weight, preferably from 1% to 15% by weight, based in each case on the amount by weight of components (a1) to (a4), which is 100% by weight.

4. The process according to one or more of claims 1 to 3, where component (a4) comprises at least one flame retardant selected from the group consisting of polybrominated compounds and organophosphorus compounds.

5. The process according to one or more of claims 1 to 4, where component (a4) comprises at least one organophosphoric acid derivative.

6. The process according to one or more of claims 1 to 5, where component (a4) comprises at least one organophosphonic acid derivative.

7. The process according to one or more of claims 1 to 6, where component (a4) comprises at least one organophosphinic acid derivative.

8. The process according to one or more of claims 1 to 7, where component (a4) comprises at least one compound which comprises a functional group reactive toward isocyanates, in particular at least 2 such reactive functional groups.

9. The process according to one or more of claims 1 to 8, where the at least one polyfunctional isocyanate (a1) is formed from at least one polyfunctional isocyanate selected from diphenylmethane 4,4'-diisocyanate, diphenylmethane 2,4'-diisocyanate, diphenylmethane 2,2'-diisocyanate, and oligomeric diphenylmethane diisocyanate.

10. The process according to one or more of claims 1 to 9, where component (a1) comprises oligomeric diphenylmethane diisocyanate and its functionality is at least 2.4.

11. The process according to one or more of claims 1 to 10, where component (a2) comprises oligomeric diaminodiphenylmethane and its functionality is at least 2.4.

12. The process according to one or more of claims 1 to 11, where the at least one polyfunctional aromatic amine comprises at least one polyfunctional aromatic amine of the general formula I, 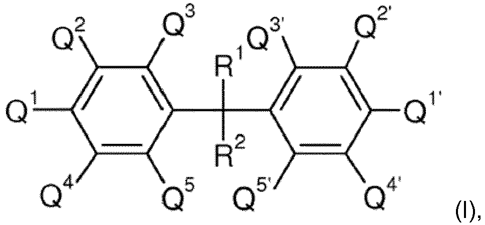 where R¹ and R² can be identical or different and are selected mutually independently from hydrogen and linear or branched alkyl groups having from 1 to 6 carbon atoms, and where all of the substituents Q¹ to Q⁵ and Q^{1'} to Q^{5'} are identical or different and are selected mutually independently from hydrogen, a primary amino group, and a linear or branched alkyl group having from 1 to 12 carbon atoms, where the alkyl group can bear further functional groups, with the proviso that the compound of the general formula I comprises at least two primary amino groups, where at least one of Q¹, Q³, and Q⁵ is a primary amino group, and at least one of Q^{1'}, Q^{3'}, and Q^{5'} is a primary amino group.

13. The process according to claim 12, where Q², Q⁴, Q^{2'}, and Q^{4'} are selected in such a way that the compound of the general formula I has at least one linear or branched alkyl group which can bear further functional groups and which has from 1 to 12 carbon atoms in α-position with respect to at least one primary amino group bonded to the aromatic ring.

14. The process according to one or more of claims 1 to 13, where component (a2) comprises at least one of the following compounds: 4,4'-diaminodiphenylmethane, 2,4'-diaminodiphenylmethane, 2,2'-diaminodiphenylmethane, and oligomeric diaminodiphenylmethane.

15. The process according to one or more of claims 1 to 14, where the reaction is carried out in the presence of a catalyst (a5).

16. The process according to one or more of claims 1 to 15, where the removal of the solvent takes place via conversion of the solvent to the gaseous state at a temperature and a pressure below the critical temperature and the critical pressure of the solvent.

17. A porous material obtainable according to claims 1 to 16.

18. The porous material according to claim 17, where the volume-weighted average pore diameter of the xerogel is at most 5 micrometers.

19. The use of the porous material according to claim 17 or 18 for thermal insulation.

20. The use of the porous material according to claim 17 or 18 for thermal insulation in construction applications.

## Revendications

1. Procédé pour la préparation de matériaux poreux comprenant les étapes suivantes :
(a) transformation d'au moins un isocyanate polyfonctionnel (a1) et d'au moins une amine aromatique polyfonctionnelle (a2) dans un solvant organique éventuellement en présence d'eau en tant que composant (a3) et éventuellement en présence d'au moins un catalyseur (a5) ; et ensuite
(b) élimination du solvant organique avec obtention du matériau poreux organique,
l'étape (a) étant mise en œuvre en présence d'au moins un agent ignifugeant organique en tant que composant (a4), qui est soluble dans le solvant,
l'au moins une amine aromatique polyfonctionnelle (a2) étant choisie dans le groupe constitué par des isomères et des dérivés de diaminodiphénylméthane.

2. Procédé selon la revendication 1, les agents ignifugeants du composant (a3) étant des composés contenant du phosphore et/ou un halogène, en particulier du brome.

3. Procédé selon la revendication 1 ou 2, le composant (a4) étant utilisé en des quantités de 0,1 à 25 % en poids, préférablement de 1 à 15 % en poids, à chaque fois par rapport à la quantité en poids de composants (a1) à (a4), qui donne 100 % en poids.

4. Procédé selon l'une ou plusieurs des revendications 1 à 3, le composant (a4) contenant au moins un agent ignifugeant qui est choisi dans le groupe constitué par des composés polybromés et des composés organiques du phosphore.

5. Procédé selon l'une ou plusieurs des revendications 1 à 4, le composant (a4) comprenant au moins un dérivé d'acide organophosphorique.

6. Procédé selon l'une ou plusieurs des revendications 1 à 5, le composant (a4) comprenant au moins un dérivé d'acide organophosphonique.

7. Procédé selon l'une ou plusieurs des revendications 1 à 6, le composant (a4) comprenant au moins un dérivé d'acide organophosphinique.

8. Procédé selon l'une ou plusieurs des revendications 1 à 7, le composant (a4) comprenant au moins un composé qui contient un groupe fonctionnel réactif envers des isocyanates, en particulier au moins 2 tels groupes fonctionnels réactifs.

9. Procédé selon l'une ou plusieurs des revendications 1 à 8, l'au moins un isocyanate polyfonctionnel (a1) étant construit à partir d'au moins un isocyanate polyfonctionnel choisi parmi le 4,4'-diisocyanate de diphénylméthane, le 2,4'-diisocyanate de diphénylméthane, le 2,2'-diisocyanate de diphénylméthane et un diisocyanate de diphénylméthane oligomérique.

10. Procédé selon l'une ou plusieurs des revendications 1 à 9, le composant (a1) contenant un diisocyanate de diphénylméthane oligomérique et présentant une fonctionnalité d'au moins 2,4.

11. Procédé selon l'une ou plusieurs des revendications 1 à 10, le composant (a2) contenant un diaminodiphénylméthane oligomérique et présentant une fonctionnalité d'au moins 2,4.

12. Procédé selon l'une ou plusieurs des revendications 1 à 11, l'au moins une amine aromatique polyfonctionnelle comprenant au moins une amine aromatique polyfonctionnelle selon la formule générale I, 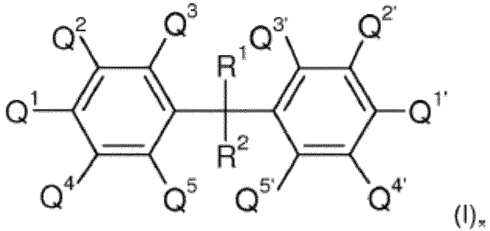 R¹ et R² pouvant être identiques ou différents et étant choisis indépendamment l'un de l'autre parmi hydrogène et des groupes alkyle linéaires ou ramifiés comportant 1 à 6 atomes de carbone et tous les substituants Q¹ à Q⁵ et Q^{1'} à Q^{5'} étant identiques ou différents et étant choisis indépendamment les uns des autres parmi hydrogène, un groupe amino primaire et un groupe alkyle linéaire ou ramifié comportant 1 à 12 atomes de carbone, le groupe alkyle pouvant porter d'autres groupes fonctionnels, à la condition que le composé selon la formule générale I comprenne au moins deux groupes amino primaire, au moins l'un parmi Q¹, Q³ et Q⁵ étant un groupe amino primaire et au moins l'un parmi Q^{1'}, Q^{3'} et Q^{5'} étant un groupe amino primaire.

13. Procédé selon la revendication 12, Q², Q⁴, Q^{2'} et Q^{4'} étant choisis de telle manière que le composé selon la formule générale I présente au moins un groupe alkyle linéaire ou ramifié, qui peut porter d'autres groupes fonctionnels, comportant 1 à 12 atomes de carbone en position α par rapport à au moins un groupe amino primaire lié au noyau aromatique.

14. Procédé selon l'une ou plusieurs des revendications 1 à 13, le composant (a2) contenant au moins l'un des composés suivants : 4,4'-diaminodiphénylméthane, 2,4'-diaminodiphénylméthane, 2,2'-diaminodiphénylméthane et un diaminodiphénylméthane oligomérique.

15. Procédé selon l'une ou plusieurs des revendications 1 à 14, la transformation étant mise en œuvre en présence d'un catalyseur (a5).

16. Procédé selon l'une ou plusieurs des revendications 1 à 15, l'élimination du solvant étant réalisée par conversion d'un solvant à l'état gazeux à une température et une pression inférieures à la température critique et à la pression critique du solvant.

17. Matériau poreux pouvant être obtenu selon les revendications 1 à 16.

18. Matériau poreux selon la revendication 17, le diamètre moyen de pores pondéré en volume du xérogel étant d'au plus 5 micromètres.

19. Utilisation du matériau poreux selon la revendication 17 ou 18 pour l'isolation thermique.

20. Utilisation du matériau poreux selon la revendication 17 ou 18 pour l'isolation thermique dans des applications dans la construction.
